# EUROPEAN PATENT APPLICATION

(11) **EP 4 672 127 A1**
(43) Date of publication of application: **31.12.2025**
(21) Application number: 24760294.9
(22) Date of filing: 19.02.2024
(51) Int. Cl.: G06Q 50/04

(54) **CONTROL DEVICE, HYDROGEN CARRIER MANUFACTURING SYSTEM, AND CONTROL METHOD**

(30) Priority: 21.02.2023 JP 2023025201
(71) Applicant: ENEOS Corporation, Chiyoda-ku Tokyo 100-8162 (JP)
(72) Inventor: INOUE, Jun, Tokyo 100-8162 (JP); MAEDA, Seiji, Tokyo 100-8162 (JP); NEGISHI, Yoshinori, Tokyo 100-8162 (JP); MACHII, Kenji, Tokyo 100-8162 (JP); SEIKE, Tadashi, Tokyo 100-8162 (JP); MINODA, Ai, Tokyo 100-8162 (JP)
(74) Representative: Piotrowicz, Pawel Jan Andrzej
(86) International application number: PCT/JP2024/005687
(87) International publication number: WO 2024/176995

(57) **Abstract**

A control apparatus for controlling a hydrogen manufacturing device for manufacturing hydrogen and a hydrogen carrier manufacturing device for converting the hydrogen into a hydrogen carrier, the control apparatus including an information acquisition unit configured to acquire information related to manufacturing of the hydrogen and the hydrogen carrier; and a device control unit configured to control an operation state of at least one of the hydrogen manufacturing device or the hydrogen carrier manufacturing device by using the information.

## Description

### TECHNICAL FIELD

The present invention relates to a control apparatus, a hydrogen carrier manufacturing system, and a control method.

### BACKGROUND ART

In recent years, environmental problems such as global warming have become a global issue, and hydrogen, which does not generate carbon dioxide when used, is attracting attention as a new energy to promote decarbonization. In particular, if hydrogen is manufactured by using renewable energy such as solar power generation and wind power generation, further reduction of carbon dioxide can be expected.

Technology for efficiently storing and transporting hydrogen is required. Substances capable of storing and transporting hydrogen are called hydrogen carriers, etc. Various technologies for converting gaseous hydrogen (hydrogen gas) into hydrogen carriers have been proposed.

For example, Patent Document 1 discloses a solar power generation system having a hydrogen manufacturing means for storing solar energy. The solar power generation system disclosed in Patent Document 1 includes a hydrogen manufacturing means for manufacturing hydrogen by using a DC current obtained by a solar power generation device, and a hydrogen storage means for converting the hydrogen obtained by the hydrogen manufacturing means into saturated hydrocarbons and storing them.

### CITATION LIST

### PATENT DOCUMENTS

Patent Document 1: Japanese Unexamined Patent Application Publication No. 2014-203274

### SUMMARY OF INVENTION

### TECHNICAL PROBLEM

However, in the conventional technology, there is a problem that the operation state of a hydrogen manufacturing device or a hydrogen carrier manufacturing device is not controlled based on information related to the manufacturing of hydrogen and a hydrogen carrier. For example, the operation state of a device for manufacturing a hydrogen carrier cannot be properly controlled unless the control is based on the manufacturing amount of hydrogen and hydrogen carriers.

In view of the above technical problem, an object of a mode of the present invention is to appropriately control the operation state of a device for manufacturing hydrogen carriers.

### SOLUTION TO PROBLEM

A control apparatus according to an aspect of the present invention is a control apparatus for controlling a hydrogen manufacturing device for manufacturing hydrogen and a hydrogen carrier manufacturing device for converting the hydrogen into a hydrogen carrier, the control apparatus including an information acquisition unit configured to acquire information related to manufacturing of the hydrogen and the hydrogen carrier; and a device control unit configured to control an operation state of at least one of the hydrogen manufacturing device or the hydrogen carrier manufacturing device by using the information.

### BRIEF DESCRIPTION OF THE DRAWINGS

[FIG. 1] FIG. 1 is a block diagram illustrating a first example of a hydrogen supply chain.
[FIG. 2] FIG. 2 is a block diagram illustrating a second example of a hydrogen supply chain.
[FIG. 3] FIG. 3 is a block diagram illustrating a third example of a hydrogen supply chain.
[FIG. 4] FIG. 4 is a block diagram illustrating an example of the overall configuration of a hydrogen carrier manufacturing system in a first embodiment.
[FIG. 5] FIG. 5 is a block diagram illustrating an example of a hardware configuration of a computer.
[FIG. 6] FIG. 6 is a block diagram illustrating an example of the functional configuration of a control apparatus in the first embodiment.
[FIG. 7] FIG. 7 is a flowchart illustrating an example of the control method in the first embodiment.
[FIG. 8] FIG. 8 is a flowchart illustrating an example of the operation state determination processing in the first embodiment.
[FIG. 9] FIG. 9 is a diagram illustrating a first example of verification results in the first embodiment.
[FIG. 10] FIG. 10 is a diagram illustrating a second example of the verification result in the first embodiment.
[FIG. 11] FIG. 11 is a diagram illustrating a third example of the verification result in the first embodiment.
[FIG. 12] FIG. 12 is a diagram illustrating a fourth example of the verification result in the first embodiment.
[FIG. 13] FIG. 13 is a block diagram illustrating an example of the functional configuration of the control apparatus in a second embodiment.
[FIG. 14] FIG. 14 is a flowchart illustrating an example of the control method in the second embodiment.
[FIG. 15] FIG. 15 is a flowchart illustrating an example of the operation state determination processing in the second embodiment.
[FIG. 16] FIG. 16 is a block diagram illustrating an example of the functional configuration of the control apparatus in a third embodiment.
[FIG. 17] FIG. 17 is a flowchart illustrating an example of the control method in the third embodiment.
[FIG. 18] FIG. 18 is a flowchart illustrating an example of the operation state determination processing in the third embodiment.
[FIG. 19] FIG. 19 is a flowchart illustrating an example of the operation state determination processing in the third embodiment.
[FIG. 20] FIG. 20 is a flowchart illustrating an example of the operation state determination processing in the third embodiment.
[FIG. 21] FIG. 21 is a flowchart illustrating an example of the operation state determination processing in a fourth embodiment.
[FIG. 22] FIG. 22 is a flowchart illustrating an example of the operation state determination processing in the fourth embodiment.
[FIG. 23] FIG. 23 is a flowchart illustrating an example of the operation state determination processing in the fourth embodiment.
[FIG. 24] FIG. 24 is a block diagram illustrating an example of the overall configuration of the hydrogen gas generation system in modified example 1.

### DESCRIPTION OF EMBODIMENTS

Each embodiment of the present invention will be described below with reference to the attached drawings. In the present specification and the drawings, components having substantially the same functional configuration are denoted by the same reference numerals, and duplicate descriptions are omitted.

### [First embodiment]

The first embodiment of the present invention is a hydrogen carrier manufacturing system for manufacturing hydrogen carriers. The hydrogen carriers are substances obtained by converting gaseous hydrogen (hydrogen gas) into a liquid or the like that can be efficiently stored and transported. In the hydrogen carrier manufacturing system of the present embodiment, hydrogen gas is manufactured by electrolyzing water, and the hydrogen gas is converted into a liquid to manufacture the hydrogen carriers. Hereinafter, simply referring to "hydrogen" means gaseous hydrogen (hydrogen gas).

### <Hydrogen carriers>

Substances that can be used as hydrogen carriers are, for example, methylcyclohexane (MCH), ammonia (NH3), or liquid hydrogen (LH2). Methylcyclohexane can be obtained by reacting toluene with hydrogen. Ammonia can be obtained by reacting hydrogen with nitrogen. Liquid hydrogen is liquefied by cooling hydrogen to below the boiling point (-253 °C).

The hydrogen carriers can be converted back to hydrogen by a chemical reaction such as dehydrogenation, or the hydrogen carriers can be used as is (in the state of hydrogen carriers). Toluene obtained by dehydrogenation of methylcyclohexane can be transported to the manufacturing area of hydrogen carriers and reused for the manufacturing of new methylcyclohexane. Ammonia can be used as a raw material for fertilizers and chemical products, for example. Ammonia itself can also be used as a fuel. Liquid hydrogen can be used as a fuel for rockets, for example.

In the hydrogen carrier manufacturing system of the present embodiment, hydrogen is manufactured by using power derived from renewable energy. In the hydrogen carrier manufacturing system of the present embodiment, hydrogen is converted into hydrogen carriers by using power derived from renewable energy. Therefore, the hydrogen carriers manufactured by the hydrogen carrier manufacturing system of the present embodiment can be used as clean energy with reduced emission of carbon dioxide in the cycle from manufacturing to use.

### <Hydrogen supply chain>

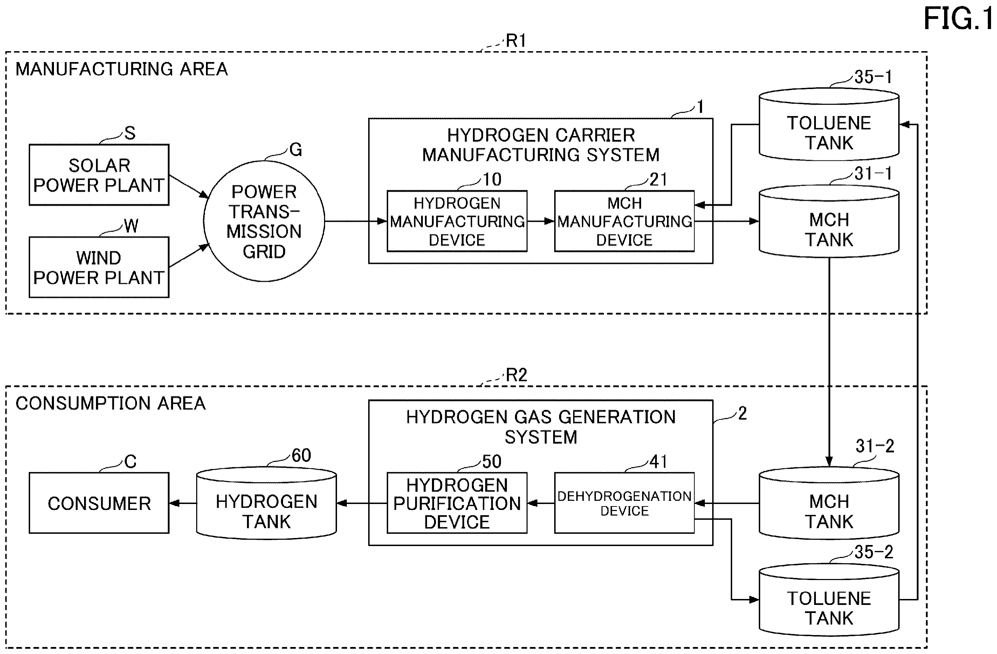

The hydrogen supply chain of the present embodiment will be described with reference to FIGS. 1 to 3. The hydrogen supply chain is a series of flows from manufacturing, transportation, and consumption of hydrogen.

### <<When the hydrogen carriers are methylcyclohexane>>

FIG. 1 illustrates an example of the hydrogen supply chain when the hydrogen carriers are methylcyclohexane. As illustrated in FIG. 1, the hydrogen supply chain in the present embodiment includes a manufacturing area R1 and a consumption area R2. At least one of hydrogen or hydrogen carriers (hereinafter abbreviated as "hydrogen and the like") is manufactured at the manufacturing area R1. Hydrogen and the like are consumed at the consumption area R2. The manufacturing area R1 and the consumption area R2 may be different countries or different regions within the same country. At least one of the manufacturing area R1 or the consumption area R2 may be plural. The transport route of the hydrogen carriers connecting the manufacturing area R1 and the consumption area R2 may be a land route only, or may include a sea route or an air route.

A hydrogen carrier manufacturing system 1, an MCH tank 31-1, and a toluene tank 35-1 are installed in the manufacturing area R1. Hydrogen carriers (methylcyclohexane in this example) manufactured by the hydrogen carrier manufacturing system 1 are stored in the MCH tank 31-1. Toluene used for manufacturing methylcyclohexane is stored in the toluene tank 35-1.

The hydrogen carrier manufacturing system 1 is connected to a power transmission grid G. The power transmission grid G is connected to a solar power plant S and a wind power plant W that supply power derived from renewable energy. A thermal power plant or a nuclear power plant that supply power derived from energy other than renewable energy may be connected to power transmission grid G. The hydrogen carrier manufacturing system 1 receives power derived from renewable energy from a solar power plant S or a wind power plant W via power transmission grid G.

The hydrogen carrier manufacturing system 1 manufactures methylcyclohexane by using power supplied from power transmission grid G. The hydrogen carrier manufacturing system 1 includes a hydrogen manufacturing device 10 and an MCH manufacturing device 21. The hydrogen manufacturing device 10 manufactures hydrogen by using power supplied from power transmission grid G. The MCH manufacturing device 21 manufactures methylcyclohexane by reacting hydrogen manufactured by the hydrogen manufacturing device 10 with toluene supplied from the toluene tank 35-1. Methylcyclohexane manufactured by the MCH manufacturing device 21 is stored in the MCH tank 31-1.

Methylcyclohexane stored in the MCH tank 31-1 is transported from the manufacturing area R1 to the consumption area R2 by means of transportation corresponding to the transportation route between the manufacturing area R1 and the consumption area R2. For transportation of methylcyclohexane, for example, a tanker or the like is used by sea route and a tank truck or the like is used by land route. However, transportation means are not limited to these, and any means capable of transporting methylcyclohexane safely may be used.

A hydrogen gas generation system 2, an MCH tank 31-2, a toluene tank 35-2, and a hydrogen tank 60 are installed in the consumption area R2. Methylcyclohexane transported from the manufacturing area R1 is stored in the MCH tank 31-2. Toluene obtained by dehydrogenating methylcyclohexane is stored in the toluene tank 35-2. Toluene stored in the toluene tank 35-2 is transported from the consumption area R2 to the manufacturing area R1 by means of transportation corresponding to the transportation route between the manufacturing area R1 and the consumption area R2. Toluene transported to the manufacturing area R1 is stored in a toluene tank 35-1.

The hydrogen gas generation system 2 converts methylcyclohexane supplied from the MCH tank 31-2 back to hydrogen. The hydrogen gas generation system 2 includes a dehydrogenation device 41 and a hydrogen purification device 50. The dehydrogenation device 41 separates methylcyclohexane supplied from the MCH tank 31-2 into hydrogen and toluene by a chemical reaction such as dehydrogenation. The toluene obtained by the dehydrogenation device 41 is stored in a toluene tank 35-2.

The hydrogen purification device 50 purifies the hydrogen obtained by the dehydrogenation device 41 into high-purity hydrogen. The hydrogen purified by the hydrogen purification device 50 is stored in a hydrogen tank 60.

The hydrogen stored in the hydrogen tank 60 is supplied to the consumer C to be consumed. The supply to the consumer C may be carried by filling the hydrogen into a container such as a hydrogen cylinder, or may be carried via a pre-installed pipeline.

The consumer C may be, for example, a steel plant, a power plant, a chemical plant, or a hydrogen station. The consumer C may be the hydrogen gas generation system 2 itself. That is, the hydrogen obtained in the hydrogen gas generation system 2 may be consumed in the hydrogen gas generation system 2 or in another system attached to the hydrogen gas generation system 2.

### <<When the hydrogen carriers are ammonia>>

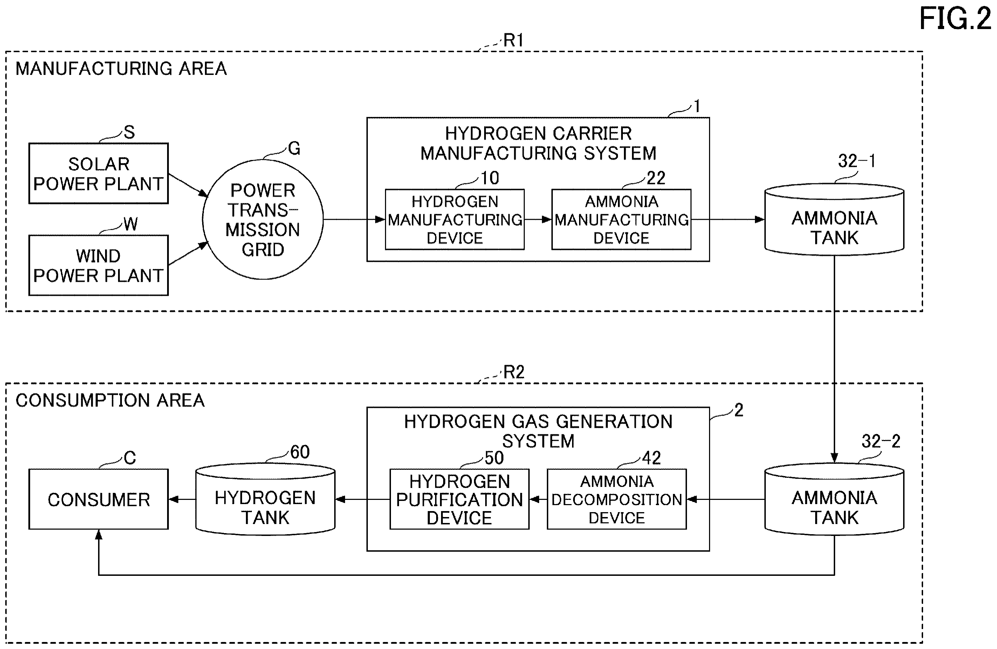

FIG. 2 is a diagram illustrating an example of the hydrogen supply chain when the hydrogen carriers are ammonia. As illustrated in FIG. 2, when the hydrogen carriers are ammonia, the ammonia tank 32-1 is installed in the manufacturing area R1 instead of the MCH tank 31-1 and the toluene tank 35-1. The hydrogen carrier manufacturing system 1 is provided with an ammonia manufacturing device 22 instead of the MCH manufacturing device 21.

The ammonia manufacturing device 22 reacts nitrogen in the atmosphere with hydrogen manufactured by the hydrogen manufacturing device 10 to manufacture ammonia. The nitrogen can be obtained by an air separating device or the like. The ammonia manufactured by the ammonia manufacturing device 22 is stored in an ammonia tank 32-1.

An ammonia tank 32-2 is installed in the consumption area R2 instead of the MCH tank 31-2 and the toluene tank 35-2. The hydrogen gas generation system 2 is provided with an ammonia decomposition device 42 instead of the dehydrogenation device 41.

The ammonia decomposition device 42 reacts ammonia supplied from the ammonia tank 32-2 with a catalyst to separate hydrogen and nitrogen. The ammonia decomposition device 42 may convert ammonia into ammonia gas by vaporizing ammonia.

Hydrogen or ammonia gas obtained by the ammonia decomposition device 42 is supplied to the consumer C to be consumed. Ammonia stored in the ammonia tank 32-2 may be supplied to the consumer C as ammonia to be consumed. Hydrogen or ammonia may be consumed inside the hydrogen gas generation system 2 or in another system attached to the hydrogen gas generation system 2.

### <<When the hydrogen carriers are liquid hydrogen>>

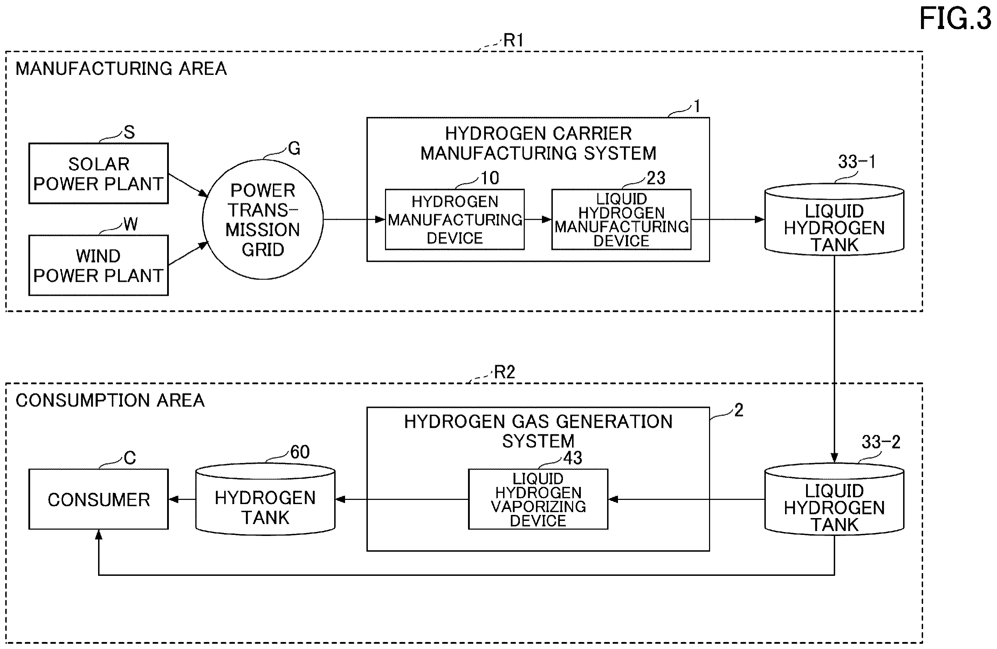

FIG. 3 illustrates an example of a hydrogen supply chain when the hydrogen carriers are liquid hydrogen. As illustrated in FIG. 3, when the hydrogen carriers are liquid hydrogen, a liquid hydrogen tank 33-1 is installed in the manufacturing area R1 instead of the MCH tank 31-1 and the toluene tank 35-1 (or the ammonia tank 32-1). Further, the hydrogen carrier manufacturing system 1 includes a liquid hydrogen manufacturing device 23 instead of the MCH manufacturing device 21 (or the ammonia manufacturing device 22).

The liquid hydrogen manufacturing device 23 cools hydrogen manufactured by the hydrogen manufacturing device 10 to manufacture liquid hydrogen. The liquid hydrogen manufactured by the liquid hydrogen manufacturing device 23 is stored in a liquid hydrogen tank 33-1.

A liquid hydrogen tank 33-2 is installed in the consumption area R2 instead of the MCH tank 31-2 and the toluene tank 35-2 (or the ammonia tank 32-2). The hydrogen gas generation system 2 is provided with a liquid hydrogen vaporizing device 43 instead of the dehydrogenation device 41 (or the ammonia decomposition device 42) and the hydrogen purification device 50.

The liquid hydrogen vaporizing device 43 vaporizes the liquid hydrogen supplied from the liquid hydrogen tank 33-2 and converts it back to hydrogen. The hydrogen obtained by the liquid hydrogen vaporizing device 43 is supplied to the consumer C to be consumed. The liquid hydrogen stored in the liquid hydrogen tank 33-2 may be supplied to the consumer C as liquid hydrogen to be consumed. Note that hydrogen or liquid hydrogen may be consumed in the hydrogen gas generation system 2 or in another system attached to the hydrogen gas generation system 2.

### <Overall configuration of hydrogen carrier manufacturing system>

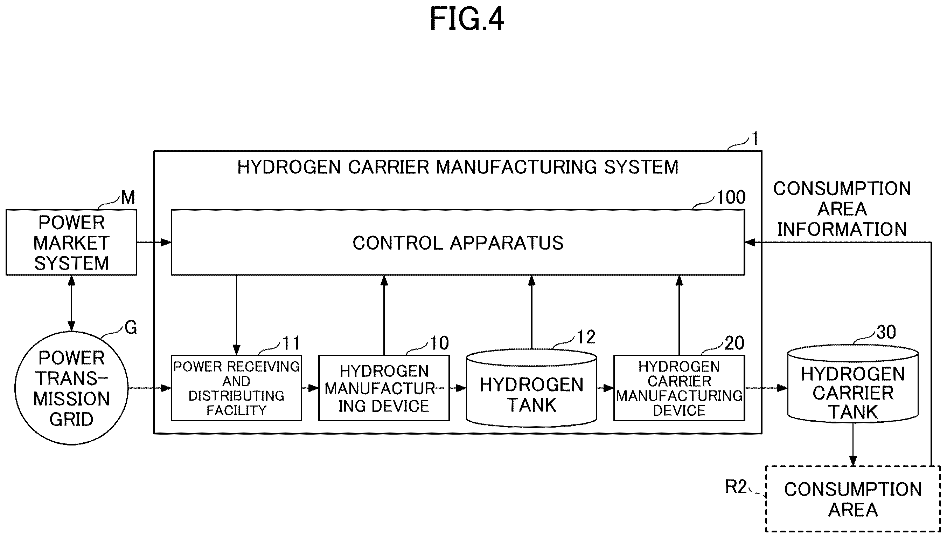

The overall configuration of the hydrogen carrier manufacturing system of the present embodiment will be described with reference to FIG. 4. FIG. 4 is a block diagram illustrating an example of the overall configuration of the hydrogen carrier manufacturing system of the present embodiment.

As illustrated in FIG. 4, the hydrogen carrier manufacturing system 1 of the present embodiment includes the hydrogen manufacturing device 10, a power receiving and distributing facility 11, a hydrogen tank 12, a hydrogen carrier manufacturing device 20, and a control apparatus 100. The hydrogen carrier manufacturing system 1 of the present embodiment is connected to a power market system M located at the manufacturing area R1, a power transmission grid G, and a hydrogen carrier tank 30.

The power market system M is an information processing system for managing the power market. In the power market, power supplied by power transmission grid G is traded. The power market system M determines the power price according to the demand and supply of power. In the present embodiment, the power market system M determines the power price for each generation system of power. For example, the power market system M determines different prices for power derived from renewable energy (for example, solar, wind, geothermal, or biomass) and power derived from other energy other than renewable energy (for example, coal, oil, natural gas, or nuclear power) .

The power receiving and distributing facility 11 receives power supplied from power transmission grid G and distributes power to each device of the hydrogen carrier manufacturing system 1. The power receiving and distributing facility 11 can set power to be distributed to each device. The power receiving and distributing facility 11 sets at least power to be input to the hydrogen manufacturing device 10 based on a signal received from the control apparatus 100.

The hydrogen manufacturing device 10 manufactures hydrogen by using power input from the power receiving and distributing facility 11. In the present embodiment, the hydrogen manufacturing device 10 generates hydrogen by electrolyzing water stored in the water electrolyzer. The hydrogen manufactured by the hydrogen manufacturing device 10 is stored in a hydrogen tank 12.

The amount of hydrogen manufactured by the hydrogen manufacturing device 10 varies according to the amount of input power. Therefore, the amount of hydrogen manufactured by the hydrogen manufacturing device 10 can be adjusted by adjusting the power input from the power receiving and distributing facility 11 to the hydrogen manufacturing device 10.

The hydrogen manufactured by the hydrogen manufacturing device 10 is stored in the hydrogen tank 12. The hydrogen stored in the hydrogen tank 12 is supplied to the hydrogen carrier manufacturing device 20.

The hydrogen carrier manufacturing device 20 converts the hydrogen supplied from the hydrogen tank 12 into hydrogen carriers. An example of the hydrogen carriers is methylcyclohexane, ammonia, or liquid hydrogen. The hydrogen carrier manufacturing device 20 manufactures hydrogen carriers by performing processing according to the type of hydrogen carriers. The hydrogen carriers manufactured by the hydrogen carrier manufacturing device 20 are stored in the hydrogen carrier tank 30.

The control apparatus 100 is an information processing apparatus such as a personal computer, a workstation, or a server for controlling the operation of each device included in the hydrogen carrier manufacturing system 1. The control apparatus 100 is configured to be capable of data communication with the power market system M, the power receiving and distributing facility 11, the hydrogen manufacturing device 10, the hydrogen tank 12, and the hydrogen carrier manufacturing device 20 through a communication network.

The control apparatus 100 obtains the price of power (hereinafter also referred to as "power market price") determined by the power market system M. The control apparatus 100 transmits a control signal for controlling the operation of each device based on the comparison result of comparison between the power market price and a predetermined threshold.

The overall configuration of the hydrogen carrier manufacturing system 1 illustrated in FIG. 4 is an example, and various system configurations can be used depending on applications and purposes. For example, one or more of the hydrogen manufacturing device 10, the hydrogen carrier manufacturing device 20, and the control apparatus 100 may be included in the hydrogen carrier manufacturing system 1 by being provided in plurality. For example, the control apparatus 100 may be implemented by multiple computers or may be implemented as a cloud computing service. The division of devices such as the hydrogen manufacturing device 10, the hydrogen carrier manufacturing device 20, and the control apparatus 100 illustrated in FIG. 4 is an example.

### <Hardware configuration of the hydrogen carrier manufacturing system>

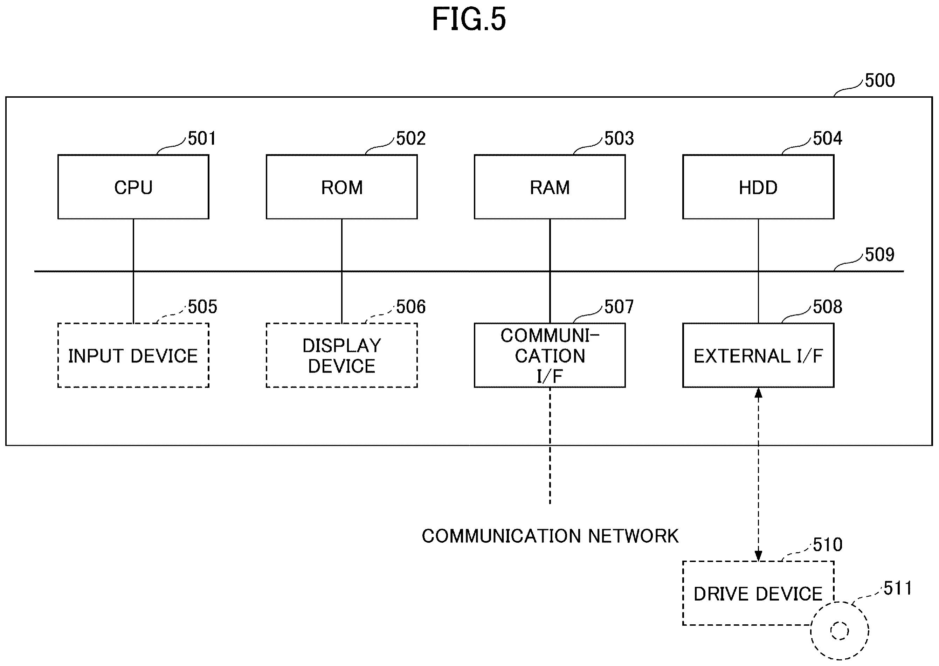

The hardware configuration of each device included in the hydrogen carrier manufacturing system 1 of the present embodiment will be described with reference to FIG. 5.

### <<Hardware configuration of the computer>>

The control apparatus 100 of the present embodiment is implemented by, for example, a computer. FIG. 5 is a block diagram illustrating an example of the hardware configuration of the computer in the present embodiment.

As illustrated in FIG. 5, a computer 500 in the present embodiment includes a CPU (Central Processing Unit) 501, a ROM (Read Only Memory) 502, a RAM (Random Access Memory) 503, an HDD (Hard Disk Drive) 504, an input device 505, a display device 506, a communication I/F (interface) 507, and an external I/F 508. The CPU 501, the ROM 502, and the RAM 503 form what is referred to as a computer. The pieces of hardware of the computer 500 are connected to each other via a bus line 509. The input device 505 and the display device 506 may be connected to the external I/F 508 for use.

The CPU 501 is an arithmetic unit that loads programs and data from a storage device such as the ROM 502 or the HDD 504 onto the RAM 503 and executes processing to implement the control and functions of the entire computer 500. The computer 500 may have a GPU (Graphics Processing Unit) in addition to the CPU 501 or instead of the CPU 501.

The ROM 502 is an example of a nonvolatile semiconductor memory (storage device) that can retain programs and data even when the power is turned off. The ROM 502 functions as a main storage device that stores various programs and data necessary for the CPU 501 to execute various programs installed in the HDD 504. Specifically, the ROM 502 stores boot programs such as BIOS (Basic Input/Output System) and EFI (Extensible Firmware Interface) that are executed when the computer 500 is started, and data such as OS (Operating System) settings and network settings.

The RAM 503 is an example of a volatile semiconductor memory (storage device) in which programs and data are erased when the power is turned off. The RAM 503 is, for example, a DRAM (Dynamic Random Access Memory) or a SRAM (Static Random Access Memory). The RAM 503 provides a work area that is loaded when various programs installed in the HDD 504 are executed by the CPU 501.

The HDD 504 is an example of a nonvolatile storage device that stores programs and data. The programs and data stored in the HDD 504 include the OS, which is the basic software that controls the entire computer 500, and applications that provide various functions on the OS. The computer 500 may use a storage device (e.g., SSD: Solid State Drive, etc.) using a flash memory as a storage medium instead of the HDD 504.

The input device 505 includes a touch panel, operation keys and buttons, a keyboard and a mouse used by the user to input various signals, and a microphone to input sound data such as sound.

The display device 506 includes a liquid crystal for displaying a screen, a display such as organic EL (Electro-Luminescence), and a speaker for outputting sound data such as sound.

The communication I/F 507 is an interface for connecting to a communication network for the computer 500 to perform data communication.

The external I/F 508 is an interface with an external device. The external device includes a drive device 510.

The drive device 510 is a device for setting the recording medium 511. The recording medium 511 here includes a medium for recording information optically, electrically, or magnetically, such as a CD-ROM, a flexible disk, a magneto-optical disk, or the like. The recording medium 511 may also include a semiconductor memory for recording information electrically, such as a ROM, a flash memory, or the like. Thus, the computer 500 can read and/or write data from/in the recording medium 511 via the external I/F 508.

Various programs installed on the HDD 504 are installed by, for example, setting the distributed recording medium 511 to the drive device 510 connected to the external I/F 508, and reading various programs recorded on the recording medium 511 by the drive device 510. Alternatively, various programs installed on the HDD 504 may be installed by being downloaded from another network different from the communication network via the communication I/F 507.

### <Functional configuration of hydrogen carrier manufacturing system>

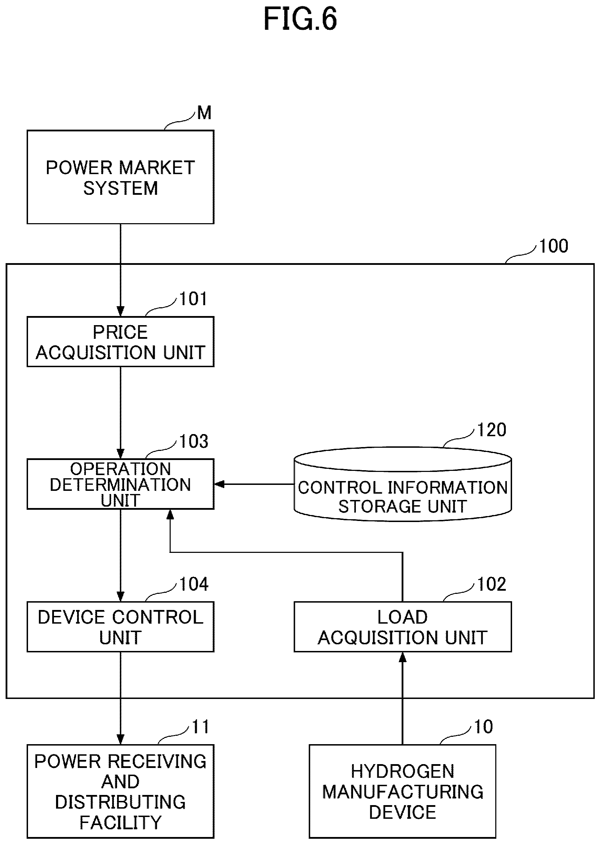

The functional configuration of the hydrogen carrier manufacturing system of the present embodiment will be described with reference to FIG. 6. FIG. 6 is a block diagram illustrating an example of the functional configuration of the hydrogen carrier manufacturing system 1 of the present embodiment.

### <<Functional configuration of the control apparatus>>

As illustrated in FIG. 6, the control apparatus 100 in the present embodiment includes a price acquisition unit 101, a load acquisition unit 102, an operation determination unit 103, a device control unit 104, and a control information storage unit 120.

The price acquisition unit 101, the load acquisition unit 102, the operation determination unit 103, and the device control unit 104 are implemented, for example, by processing that the CPU 501 is caused to execute by a program loaded on the RAM 503 from the HDD 504 illustrated in FIG. 5. The control information storage unit 120 is implemented, for example, by using the HDD 504 illustrated in FIG. 5.

The control information storage unit 120 previously stores control information for controlling each device included in the hydrogen carrier manufacturing system 1. The control information in the present embodiment includes a threshold for determining whether or not to purchase power for manufacturing at least one of hydrogen or hydrogen carriers. The threshold is, for example, an upper limit price for the power market price of power derived from renewable energy. Hereinafter, the upper limit price for the power market price is referred to as the "upper limit power price".

The control information in the present embodiment further includes a stable operation range (hereinafter also referred to as "hydrogen manufacturing load range") for the load (hereinafter also referred to as "hydrogen manufacturing load") of the hydrogen manufacturing device 10. The hydrogen manufacturing load range is defined by the upper and lower limits of the hydrogen manufacturing load.

The price acquisition unit 101 (an example of the information acquisition unit) acquires the power market price (an example of information related to manufacturing) from the power market system M at predetermined time intervals. The time interval for acquiring the power market price may correspond to the time interval for updating the power market price in the power market system M. In the present embodiment, the price acquisition unit 101 acquires the power market price every 5 minutes.

The load acquisition unit 102 (an example of an information acquisition unit) acquires the hydrogen manufacturing load (an example of information related to manufacturing) from the hydrogen manufacturing device 10. The hydrogen manufacturing load is, for example, a load rate of the hydrogen manufacturing device 10. The load rate is expressed as a ratio of the current output amount to the rated output of the hydrogen manufacturing device 10.

The operation determination unit 103 determines the operation state of the hydrogen manufacturing device 10 based on the power market price acquired by the price acquisition unit 101, the hydrogen manufacturing load acquired by the load acquisition unit 102, and the control information stored in the control information storage unit 120. The operation state of the hydrogen manufacturing device 10 includes the hydrogen manufacturing amount per unit time (hereinafter also referred to as "hydrogen manufacturing amount").

The device control unit 104 determines whether to change the hydrogen manufacturing amount based on the operation state determined by the operation determination unit 103. When changing the hydrogen manufacturing amount, the device control unit 104 transmits a control signal for changing the power input to the hydrogen manufacturing device 10 to the power receiving and distributing facility 11.

### <Processing procedure of the control method>

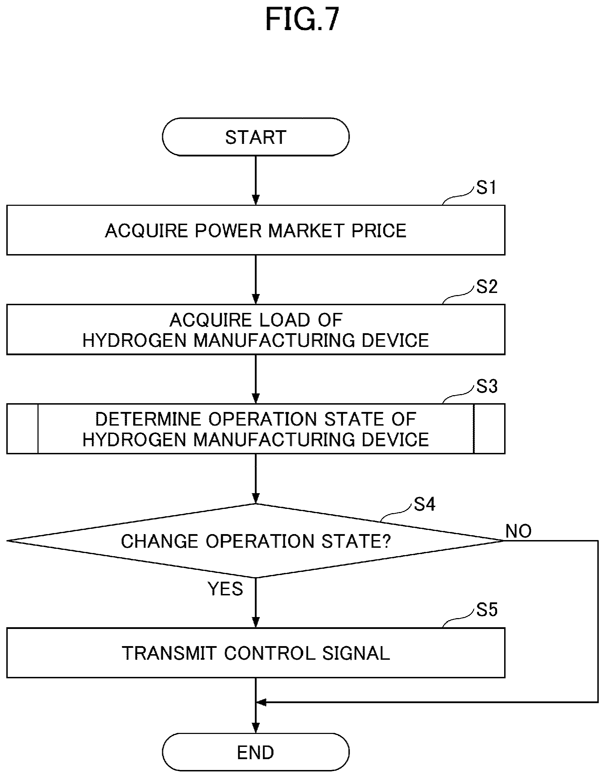

The control method executed by the control apparatus 100 in the present embodiment will be described with reference to FIG. 7. FIG. 7 is a flowchart illustrating an example of the control method in the present embodiment.

In step S1, the price acquisition unit 101 of the control apparatus 100 acquires the power market price from the power market system M at predetermined time intervals. Next, the price acquisition unit 101 sends the power market price to the operation determination unit 103.

In step S2, the load acquisition unit 102 of the control apparatus 100 acquires the hydrogen manufacturing load from the hydrogen manufacturing device 10. Next, the load acquisition unit 102 sends the hydrogen manufacturing load to the operation determination unit 103.

In step S3, the operation determination unit 103 of the control apparatus 100 receives the power market price from the price acquisition unit 101. The operation determination unit 103 also receives the hydrogen manufacturing load from the load acquisition unit 102. Next, the operation determination unit 103 reads the upper limit power price and the hydrogen manufacturing load range from the control information stored in the control information storage unit 120.

The operation determination unit 103 determines the operation state of the hydrogen manufacturing device 10 based on the power market price, the hydrogen manufacturing load, and the control information (upper limit power price and hydrogen manufacturing load range). Next, the operation determination unit 103 sends the operation state of the hydrogen manufacturing device 10 to the device control unit 104.

### <<Operation state determination process>>

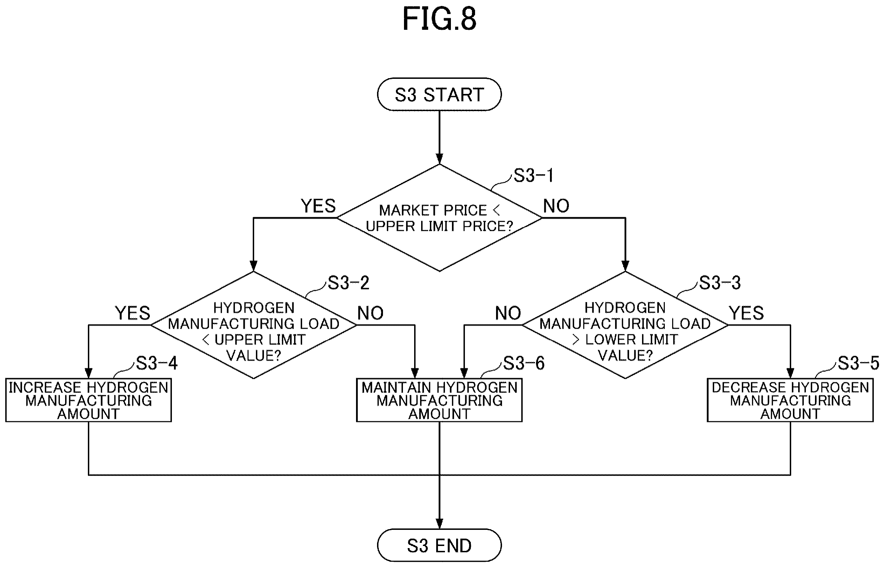

The operation state determination process (step S3 in FIG. 7) in the present embodiment will be described with reference to FIG. 8. FIG. 8 is a flowchart illustrating an example of the operation state determination process in the present embodiment.

In step S3-1, the operation determination unit 103 determines whether or not the power market price is lower than the upper limit power price. If the power market price is lower than the upper limit power price (YES), the operation determination unit 103 proceeds to step S3-2. On the other hand, if the power market price is greater than or equal to the upper limit power price (NO), the operation determination unit 103 proceeds to step S3-3.

In step S3-2, the operation determination unit 103 determines whether or not the hydrogen manufacturing load is lower than the upper limit value of the hydrogen manufacturing load range. If the hydrogen manufacturing load is lower than the upper limit value (YES), the operation determination unit 103 proceeds to step S3-4. On the other hand, if the hydrogen manufacturing load is greater than or equal to the upper limit value (NO), the operation determination unit 103 proceeds to step S3-6.

In step S3-3, the operation determination unit 103 determines whether or not the hydrogen manufacturing load is higher than the lower limit value of the hydrogen manufacturing load range. If the hydrogen manufacturing load is higher than the lower limit value (YES), the operation determination unit 103 proceeds to step S3-5. On the other hand, if the hydrogen manufacturing load is less than or equal to the lower limit value (NO), the operation determination unit 103 proceeds to step S3-6.

In step S3-4, the operation determination unit 103 increases the hydrogen manufacturing amount according to the difference between the power market price and the upper limit power price. Step S3-4 is executed when the power market price is lower than the upper limit power price and there is room to increase the hydrogen manufacturing load. In this case, the hydrogen manufacturing amount can be increased to increase sales.

In step S3-5, the operation determination unit 103 decreases the hydrogen manufacturing amount according to the difference between the power market price and the upper limit power price. Step S3-5 is executed when the power market price is greater than or equal to the upper limit power price and there is room to decrease the hydrogen manufacturing load. In this case, the hydrogen manufacturing amount can be decreased to reduce the manufacturing cost.

In step S3-6, the operation determination unit 103 maintains the hydrogen manufacturing amount. Step S3-6 is executed when the power market price is lower than the upper limit price, but there is no room to increase the hydrogen manufacturing load, or when the power market price is greater than or equal to the upper limit price, but there is no room to decrease the hydrogen manufacturing load. In this case, because there is no room to change the hydrogen manufacturing amount, the hydrogen manufacturing amount may be maintained.

Referring back to FIG. 7, description will be given. In step S4, the device control unit 104 of the control apparatus 100 receives the operation state of the hydrogen manufacturing device 10 from the operation determination unit 103. Next, the device control unit 104 determines whether to change the hydrogen manufacturing amount. Whether to change the hydrogen manufacturing amount is determined based on whether the current hydrogen manufacturing amount differs from the new hydrogen manufacturing amount indicated by the operation state. At this time, if the difference between the current hydrogen manufacturing amount and the new hydrogen manufacturing amount is greater than or equal to a predetermined threshold, it may be determined that the hydrogen manufacturing amount differs.

If it is determined that the hydrogen manufacturing amount is to be changed (YES), the device control unit 104 advances the process to step S5. On the other hand, if it is determined that the hydrogen manufacturing amount is not to be changed (NO), the device control unit 104 skips step S5 and ends the process of the control method.

In step S5, the device control unit 104 of the control apparatus 100 transmits a control signal for changing the power input to the hydrogen manufacturing device 10, to the power receiving and distributing facility 11. The control signal includes information indicating the power after the change.

The power receiving and distributing facility 11 receives the control signal from the control apparatus 100. Next, the power receiving and distributing facility 11 sets the power input to the hydrogen manufacturing device 10 based on the received control signal. The hydrogen manufacturing device 10 manufactures hydrogen according to the power input from the power receiving and distributing facility 11.

### <Verification results>

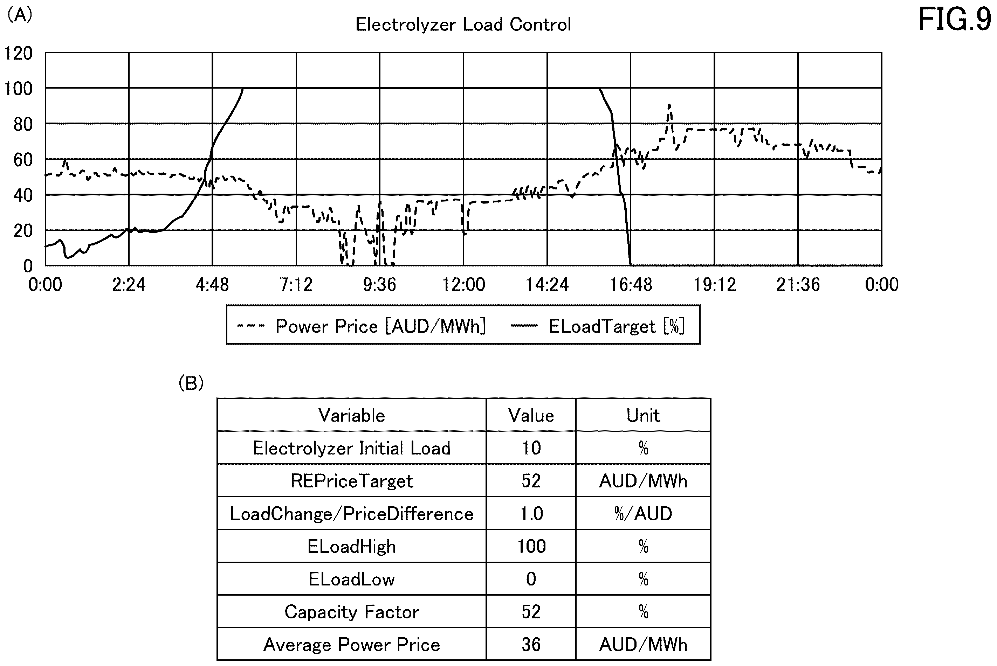

The verification results in the present embodiment will be described with reference to FIGS. 9 to 12. In this verification, the load state of the hydrogen manufacturing device 10 was simulated by using time-series data of past power market prices.

FIG. 9 is a diagram illustrating the first example of the verification results in the present embodiment. FIG. 9 (A) is a graph illustrating the relationship between the power market price (Power Price) and the hydrogen manufacturing load (ELoadTarget) in the first example. FIG. 9 (B) is a table illustrating the set values in the first example.

As illustrated in FIG. 9 (B), the initial value of the hydrogen manufacturing load (Electrolyzer Initial Load) was set to 10%, the upper limit of the power price (REPriceTarget) was set to AUD $52 per 1 MWh, the load change per price difference (LoadChange/PriceDifference) was set to 1.0% per AUD $1, the upper limit of the hydrogen manufacturing load (ELoadHigh) was set to 100%, and the lower limit of the hydrogen manufacturing load (ELoadLow) was set to 0%. The capacity factor and the average power price are daily values obtained by simulation. The capacity factor was 52%, and the average power price was AUD $36 per 1 MWh.

As illustrated in FIG. 9 (A), the hydrogen manufacturing load remains at a high level during the time period when the power market price falls below the upper limit power price. On the other hand, the hydrogen manufacturing load falls to the lower limit during the time period when the power market price exceeds the upper limit power price.

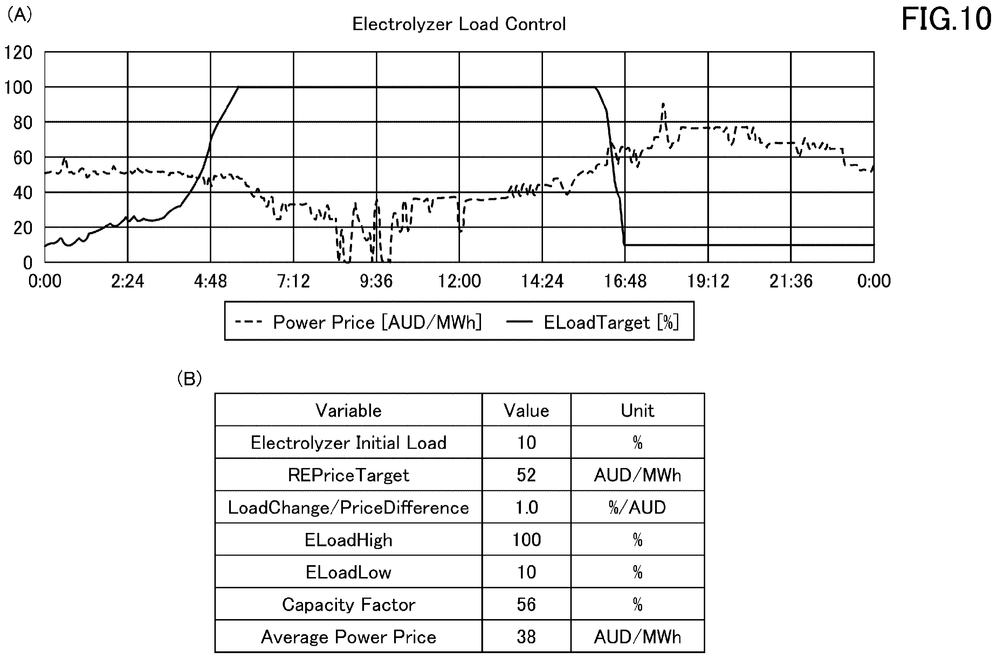

FIG. 10 illustrates the second example of the verification result in the present embodiment. FIG. 10 (A) is a graph illustrating the relationship between the power market price (Power Price) and the hydrogen manufacturing load (ELoadTarget) in the second example. FIG. 10 (B) is a table illustrating the set values in the second example.

As illustrated in FIG. 10 (B), the setting value of the second example differs from that of the first example in that the lower limit (ELoadLow) of the hydrogen manufacturing load is set to 10%. In the second example, the capacity factor is 56%, and the average power price is AUD $38 per 1 MWh.

As illustrated in FIG. 10 (A), in the second example of the verification result, as in the first example, the hydrogen manufacturing load remains at a high level during the time when the power market price is high, and the hydrogen manufacturing load drops to the lower limit during the time when the power market price is low. In the second example, because the lower limit of the hydrogen manufacturing load is set to a high value, the user continues to purchase power even during the time when the power market price is high, resulting in a high average power price although the capacity factor is increased.

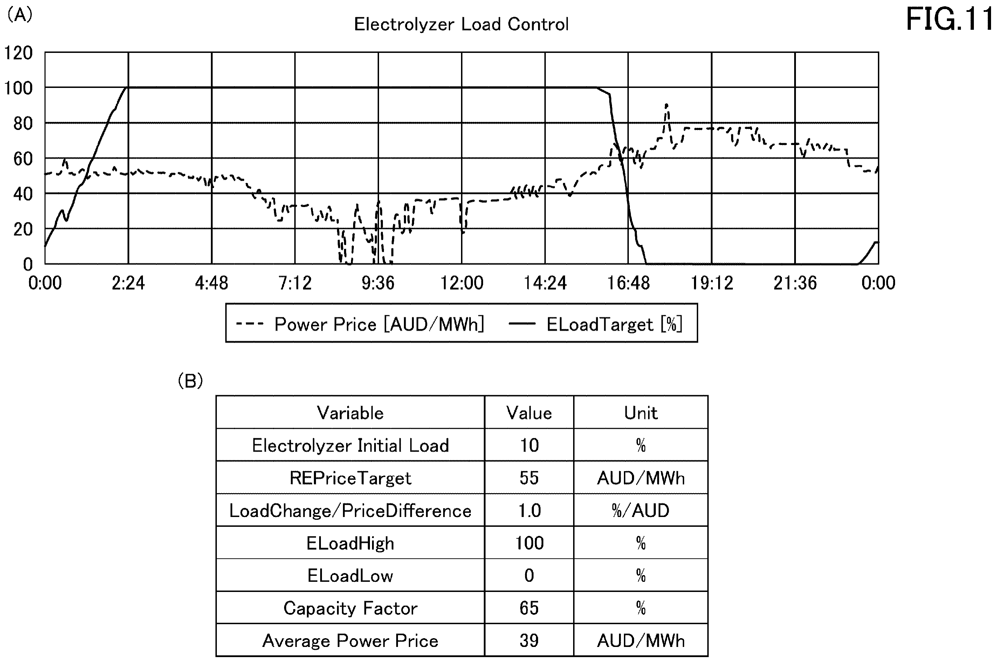

FIG. 11 illustrates the third example of the verification result in the present embodiment. FIG. 11 (A) is a graph illustrating the relationship between the power market price (Power Price) and the hydrogen manufacturing load (ELoadTarget) in the third example. FIG. 11 (B) is a table illustrating the set values in the third example.

As illustrated in FIG. 11 (B), the setting value in the third example differs from the first example in that the maximum power price (REPriceTarget) is set at AUD $55 per 1 MWh. In the third example, the capacity factor is 65%, and the average power price is AUD $39 per 1 MWh.

As illustrated in FIG. 11 (A), in the third example of the verification results, as in the first example, the hydrogen manufacturing load remains at a high level during the time period when the power market price is high, and the hydrogen manufacturing load decreases to the lower limit during the time period when the power market price is low. In the third example, because the upper limit power price is set high, both the capacity factor and the average power price become high.

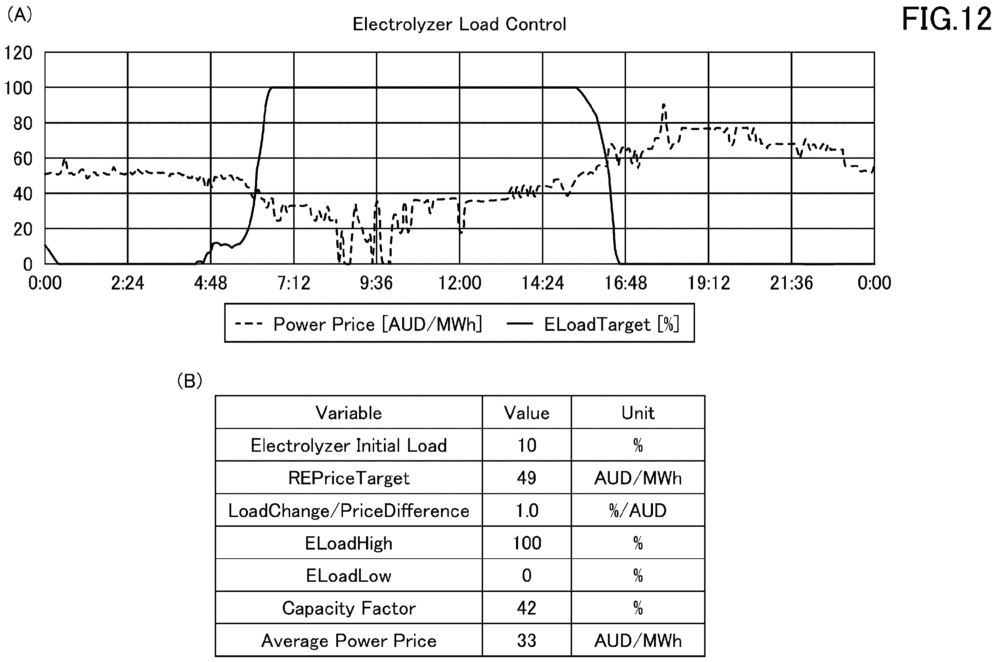

FIG. 12 is a diagram illustrating the fourth example of the verification results in the present embodiment. FIG. 12 (A) is a graph illustrating the relationship between the power market price (Power Price) and the hydrogen manufacturing load (ELoadTarget) in the fourth example. FIG. 12 (B) is a table illustrating the set values in the fourth example.

As illustrated in FIG. 12 (B), the set value in the fourth example differs from that in the first example in that the upper limit power price (REPriceTarget) is set at AUD $49 per 1 MWh. In the fourth example, the capacity factor is 42% and the average power price is AUD $33 per 1 MWh.

As illustrated in FIG. 12 (A), in the fourth example of the verification result, as in the first example, the hydrogen manufacturing load remains at a high level during the time period when the power market price is high, and the hydrogen manufacturing load decreases to the lower limit during the time period when the power market price is low. In the fourth example, because the upper limit power price is set low, both the capacity factor and the average power price become low.

The verification results illustrated in FIGS. 9 to 12 indicate that the control apparatus 100 in the present embodiment can appropriately control the load of the hydrogen manufacturing device 10 based on the comparison result of comparison between the power market price and the upper limit power price.

### <Effect of the first embodiment>

The control apparatus 100 in the present embodiment transmits a control signal for changing the hydrogen manufacturing amount of the hydrogen manufacturing device 10 based on the comparison result of comparison between the power market price obtained from the power market system M at the manufacturing area R1 and the predetermined upper limit power price. Therefore, according to the control apparatus 100 of the present embodiment, the operation state of the device for manufacturing the hydrogen carrier can be controlled based on the power price at the time of manufacturing the hydrogen carrier.

The control apparatus 100 of the present embodiment transmits a control signal instructing to increase the amount of hydrogen manufactured by the hydrogen manufacturing device 10 when the power market price is lower than the upper limit power price. Therefore, according to the control apparatus 100 of the present embodiment, when the power market price is low, the hydrogen manufacturing amount can be increased to increase sales.

The control apparatus 100 of the present embodiment transmits a control signal instructing to decrease the amount of hydrogen manufactured by the hydrogen manufacturing device 10 when the power market price is higher than the upper limit power price. Therefore, according to the control apparatus 100 of the present embodiment, when the power market price is high, the hydrogen manufacturing amount can be decreased to reduce the manufacturing cost.

Therefore, according to the hydrogen carrier manufacturing system 1 of the present embodiment, the amount of power to be purchased can be precisely varied according to the power market price which fluctuates every few minutes. Moreover, if the hydrogen manufacturing load range is appropriately set, the performance deterioration of the hydrogen manufacturing device 10 can be prevented, and the cost required for maintenance and management can be reduced. If the hydrogen carrier production load range is set appropriately, the hydrogen carrier manufacturing device 20 can be operated appropriately within a range that does not affect safety and reliability.

### [Second embodiment]

In the first embodiment, a configuration for controlling the operation state of the hydrogen manufacturing device 10 based on the power market price has been described. In the second embodiment, a configuration for controlling the operation state of the hydrogen manufacturing device 10 and the operation state of the hydrogen carrier manufacturing device 20 based on the power market price will be described.

Hereinafter, the hydrogen carrier manufacturing system 1 in the present embodiment will be described with focus on differences from the first embodiment.

### <Functional configuration of the hydrogen carrier manufacturing system>

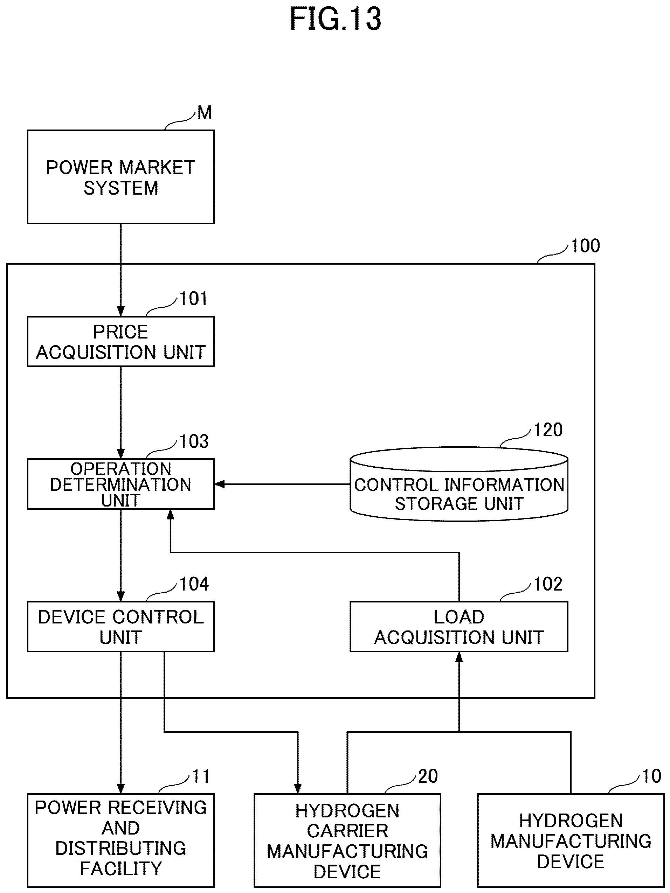

The functional configuration of the hydrogen carrier manufacturing system in the present embodiment will be described with reference to FIG. 13. FIG. 13 is a block diagram illustrating an example of the functional configuration of the hydrogen carrier manufacturing system 1 in the present embodiment.

### <<Functional configuration of the control apparatus>>

As illustrated in FIG. 13, the control apparatus 100 in the present embodiment includes the price acquisition unit 101, the load acquisition unit 102, the operation determination unit 103, the device control unit 104, and the control information storage unit 120 as in the first embodiment.

The control information in the present embodiment further includes a stable operation range (hereinafter also referred to as "hydrogen carrier production load range") for the load (hereinafter also referred to as "hydrogen carrier production load") of the hydrogen carrier manufacturing device 20. The hydrogen carrier production load range is defined by the upper and lower limits of the hydrogen carrier production load.

The load acquisition unit 102 in the present embodiment acquires the hydrogen manufacturing load from the hydrogen manufacturing device 10. The load acquisition unit 102 acquires the hydrogen carrier production load (an example of information related to manufacturing) from the hydrogen carrier manufacturing device 20. The hydrogen carrier production load is, for example, a load factor of the hydrogen carrier manufacturing device 20. The load factor is expressed as a ratio of the current output to the rated output of the hydrogen carrier manufacturing device 20.

The operation determination unit 103 in the present embodiment determines the operation state of the hydrogen manufacturing device 10 and the operation state of the hydrogen carrier manufacturing device 20 based on the upper limit power price obtained by the price acquisition unit 101, the hydrogen manufacturing load and the hydrogen carrier production load obtained by the load acquisition unit 102, and the control information stored in the control information storage unit 120. The operation state of the hydrogen carrier manufacturing device 20 includes the amount of hydrogen carriers manufactured per unit time (hereinafter also referred to as "hydrogen conversion amount").

The device control unit 104 in the present embodiment determines whether to change the hydrogen manufacturing amount or the hydrogen conversion amount based on the operation state determined by the operation determination unit 103. When the hydrogen manufacturing amount is changed, the device control unit 104 transmits a control signal for changing the power input to the hydrogen manufacturing device 10, to the power receiving and distributing facility 11. When changing the hydrogen conversion amount, the device control unit 104 transmits a control signal for changing the hydrogen carrier manufacturing amount to the hydrogen carrier manufacturing device 20.

### <Processing procedure of the control method>

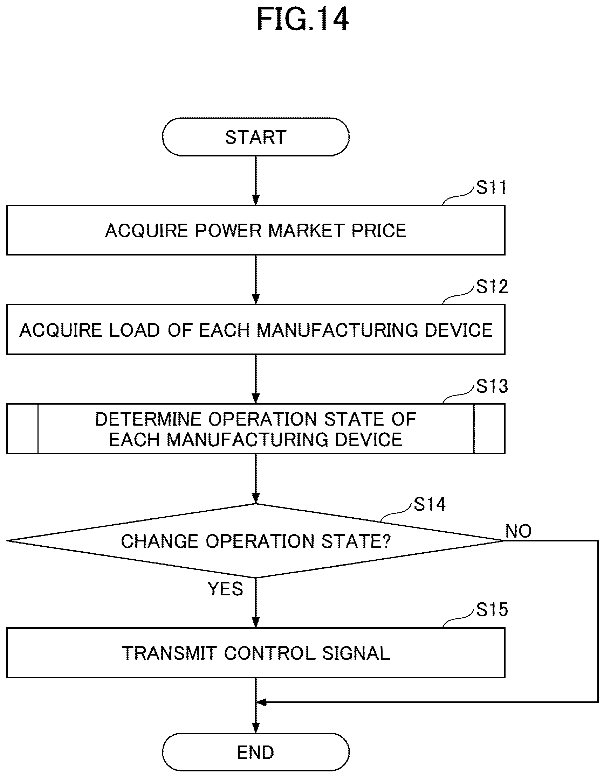

The control method executed by the control apparatus 100 in the present embodiment will be described with reference to FIG. 14. FIG. 14 is a flowchart illustrating an example of the control method in the present embodiment.

In step S11, the price acquisition unit 101 of the control apparatus 100 acquires the power market price from the power market system M at predetermined time intervals. Next, the price acquisition unit 101 sends the power market price to the operation determination unit 103.

In step S12, the load acquisition unit 102 of the control apparatus 100 acquires the hydrogen manufacturing load from the hydrogen manufacturing device 10. The load acquisition unit 102 acquires the hydrogen carrier production load from the hydrogen carrier manufacturing device 20. Next, the load acquisition unit 102 sends the hydrogen manufacturing load and the hydrogen carrier production load to the operation determination unit 103.

In step S13, the operation determination unit 103 of the control apparatus 100 receives the power market price from the price acquisition unit 101. The operation determination unit 103 also receives the hydrogen manufacturing load and the hydrogen carrier production load from the load acquisition unit 102. Next, the operation determination unit 103 reads the upper limit power price, the hydrogen manufacturing load range, and the hydrogen carrier production load range from the control information stored in the control information storage unit 120.

The operation determination unit 103 determines the operation state of the hydrogen manufacturing device 10 and the operation state of the hydrogen carrier manufacturing device 20 based on the power market price, the hydrogen manufacturing load, the hydrogen carrier production load, and the control information (upper limit power price, hydrogen manufacturing load range, and hydrogen carrier production load range). Next, the operation determination unit 103 sends the operation state of the hydrogen manufacturing device 10 and the operation state of the hydrogen carrier manufacturing device 20 to the device control unit 104.

### <<Operation state determination processing>>

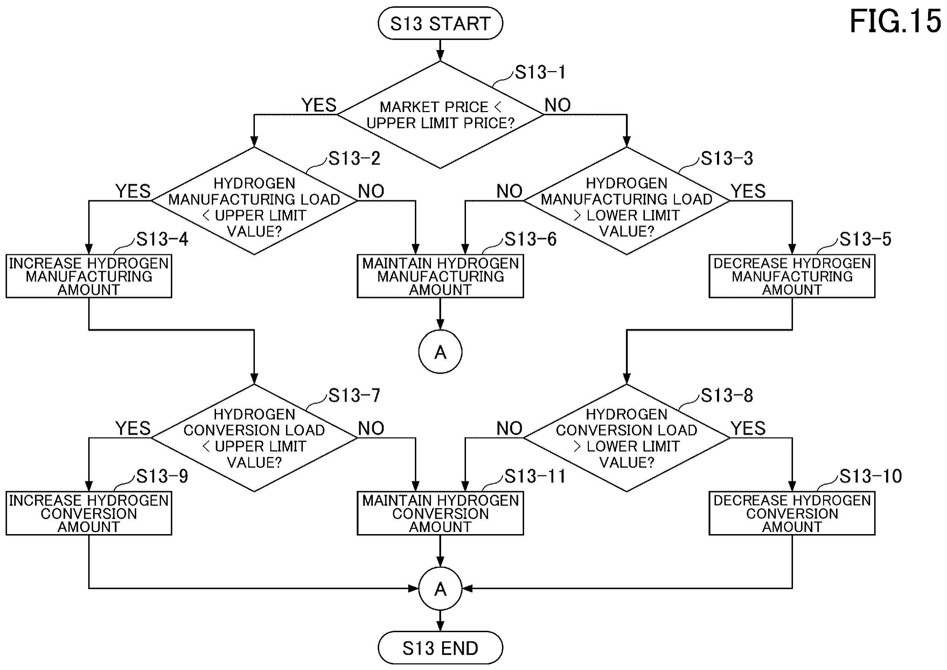

The operation state determination processing (step S13 in FIG. 14) in the present embodiment will be described with reference to FIG. 15. FIG. 15 is a flowchart illustrating an example of the operation state determination processing in the present embodiment.

Steps S13-1 to S13-6 are the same as steps S3-1 to S3-6 in the first embodiment. Therefore, a description thereof is omitted here.

In the operation state determination processing in the present embodiment, the operation determination unit 103 increases the hydrogen manufacturing amount in step S13-4, and then proceeds to step S13-7. The operation determination unit 103 decreases the hydrogen manufacturing amount in step S13-5, and then proceeds to step S13-8.

In step S13-7, the operation determination unit 103 determines whether the hydrogen carrier production load is lower than the upper limit value of the hydrogen carrier production load range. If the hydrogen carrier production load is lower than the upper limit value (YES), the operation determination unit 103 proceeds to step S13-9. On the other hand, if the hydrogen carrier production load is greater than or equal to the upper limit value (NO), the operation determination unit 103 proceeds to step S13-11.

In step S13-8, the operation determination unit 103 determines whether the hydrogen carrier production load is higher than the lower limit value of the hydrogen carrier production load range. If the hydrogen carrier production load is higher than the lower limit value (YES), the operation determination unit 103 proceeds to step S13-10. On the other hand, if the hydrogen carrier production load is less than or equal to the lower limit value (NO), the operation determination unit 103 proceeds to step S13-11.

In step S13-9, the operation determination unit 103 increases the hydrogen conversion amount in accordance with the increase in the hydrogen manufacturing amount in step S13-4. Step S13-9 is executed when there is room to increase the hydrogen carrier production load when the hydrogen manufacturing amount is increased. In this case, the hydrogen conversion amount may be increased by the amount of increase in the hydrogen manufacturing amount.

In step S13-10, the operation determination unit 103 decreases the hydrogen conversion amount in accordance with the decrease in the hydrogen manufacturing amount in step S13-5. Step S13-10 is executed when there is room to decrease the hydrogen carrier production load when the hydrogen manufacturing amount is decreased. In this case, the hydrogen conversion amount may be decreased by the amount of the decrease in the hydrogen manufacturing amount.

In step S13-11, the operation determination unit 103 maintains the hydrogen conversion amount. Step S13-11 is executed when the hydrogen manufacturing amount is increased but there is no room to increase the hydrogen carrier production load, or when the hydrogen manufacturing amount is decreased but there is no room to decrease the hydrogen carrier production load. In this case, because there is no room to change the hydrogen conversion amount, the hydrogen conversion amount may be maintained.

Referring back to FIG. 14, the explanation will be given. In step S14, the device control unit 104 of the control apparatus 100 receives the operation state of the hydrogen manufacturing device 10 and the operation state of the hydrogen carrier manufacturing device 20 from the operation determination unit 103. Next, the device control unit 104 determines whether to change the hydrogen manufacturing amount and the hydrogen conversion amount. Whether to change the hydrogen conversion amount is determined based on whether the current hydrogen conversion amount differs from the new hydrogen conversion amount indicated by the operation state. At this time, if the difference between the current hydrogen conversion amount and the new hydrogen conversion amount is greater than or equal to a predetermined threshold, it may be determined that the hydrogen conversion amount differs.

If it is determined that either the hydrogen manufacturing amount or the hydrogen conversion amount is to be changed (YES), the device control unit 104 proceeds to step S15. On the other hand, if it is determined that neither the hydrogen manufacturing amount nor the hydrogen conversion amount is to be changed (NO), the device control unit 104 skips step S15 and ends the control method processing.

In step S15, when the hydrogen manufacturing amount is to be changed, the device control unit 104 of the control apparatus 100 transmits a control signal for changing the power input to the hydrogen manufacturing device 10, to the power receiving and distributing facility 11. The control signal includes information indicating the power after the change.

When changing the hydrogen conversion amount, the device control unit 104 transmits a control signal for changing the hydrogen carrier manufacturing amount, to the hydrogen carrier manufacturing device 20. The control signal includes information indicating the hydrogen carrier manufacturing amount after the change.

When the power receiving and distributing facility 11 receives a control signal from the control apparatus 100, the power input to the hydrogen manufacturing device 10 is set based on the received control signal. The hydrogen manufacturing device 10 manufactures hydrogen according to the power input from the power receiving and distributing facility 11.

When the control signal is received from the control apparatus 100, the hydrogen carrier manufacturing device 20 sets the hydrogen carrier manufacturing amount based on the received control signal and manufactures the hydrogen carrier so as to satisfy the hydrogen carrier manufacturing amount.

### <Effect of the second embodiment>

The control apparatus 100 in the present embodiment transmits a control signal for changing the hydrogen conversion amount of the hydrogen carrier manufacturing device 20 based on the comparison result of comparison between the power market price obtained from the power market system M at the manufacturing site R1 and the predetermined upper limit power price. Therefore, according to the control apparatus 100 of the present embodiment, the operation state of the device for manufacturing the hydrogen carrier can be controlled based on the power price at the time of manufacturing the hydrogen carrier.

The control apparatus 100 of the present embodiment increases or decreases the manufacturing amount of the hydrogen carrier according to the increase or decrease of the manufacturing amount of hydrogen based on the comparison result of comparison between the power market price and the upper limit power price. Therefore, according to the control apparatus 100 of the present embodiment, the manufacturing amount of the hydrogen carrier can be increased or decreased in conjunction with the increase or decrease of the manufacturing amount of hydrogen.

### [Third embodiment]

In the second embodiment, the configuration for controlling the operation state of the hydrogen manufacturing device 10 and the operation state of the hydrogen carrier manufacturing device 20 based on the power market price has been explained. In the third embodiment, the configuration for controlling the operation state of the hydrogen manufacturing device 10 and the operation state of the hydrogen carrier manufacturing device 20 based on the filling pressure (storage amount) of the hydrogen tank 12 in addition to the power market price will be explained.

Hereinafter, the hydrogen carrier manufacturing system 1 of the present embodiment will be described with a focus on differences from the second embodiment.

### <Functional configuration of the hydrogen carrier manufacturing system>

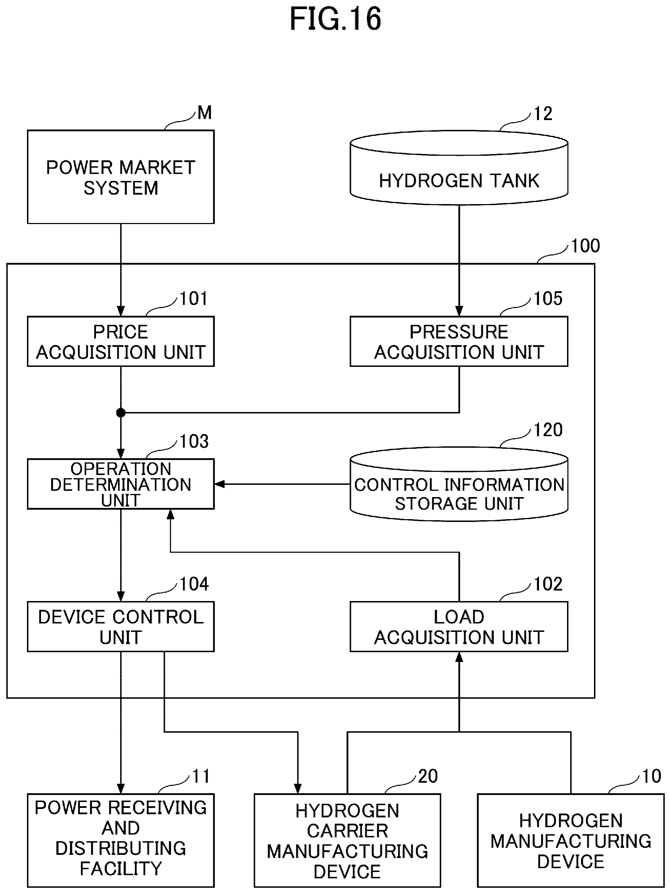

The functional configuration of the hydrogen carrier manufacturing system of the present embodiment will be described with reference to FIG. 16. FIG. 16 is a block diagram illustrating an example of the functional configuration of the hydrogen carrier manufacturing system 1 of the present embodiment.

### <<Functional configuration of the control apparatus>>

As illustrated in FIG. 16, the control apparatus 100 of the present embodiment includes a price acquisition unit 101, a load acquisition unit 102, an operation determination unit 103, a device control unit 104, a pressure acquisition unit 105, and a control information storage unit 120. That is, the control apparatus 100 of the present embodiment is different from that of the second embodiment in that it further includes a pressure acquisition unit 105.

The control information of the present embodiment further includes a stable operation range (hereinafter also referred to as "hydrogen tank pressure range") with respect to the filling pressure (hereinafter also referred to as "hydrogen tank pressure") of the hydrogen tank 12. The hydrogen tank pressure range is defined by the upper and lower limits of the hydrogen tank pressure.

The pressure acquisition unit 105 (an example of the information acquisition unit) acquires the hydrogen tank pressure (an example of information related to manufacturing) from the hydrogen tank 12. The hydrogen tank pressure can be said to be information indicating the amount of hydrogen stored in the hydrogen tank 12.

The operation determination unit 103 in the present embodiment determines the operation state of the hydrogen manufacturing device 10 and the operation state of the hydrogen carrier manufacturing device 20 based on the upper limit power price acquired by the price acquisition unit 101, the hydrogen manufacturing load and hydrogen carrier production load acquired by the load acquisition unit 102, the hydrogen tank pressure acquired by the pressure acquisition unit 105, and the control information stored in the control information storage unit 120. The operation state in the present embodiment includes the operation mode. The operation mode is information that determines the operation state of the target apparatus.

The operation state of the hydrogen manufacturing device 10 in the present embodiment includes the operation mode of the hydrogen manufacturing device 10. The operation mode of the hydrogen manufacturing device 10 includes, for example, a hot standby mode. The hot standby mode is an operation state in which hydrogen manufacturing is not performed (that is, zero hydrogen manufacturing amount), although the hydrogen manufacturing device 10 itself is activated. When the hydrogen manufacturing device 10 is set to the hot standby mode, the manufacturing of hydrogen can be safely stopped while shortening the response time when the manufacturing of hydrogen is resumed.

The operation state of the hydrogen carrier manufacturing device 20 in the present embodiment includes the operation mode of the hydrogen carrier manufacturing device 20. The operation mode of the hydrogen carrier manufacturing device 20 includes, for example, a hot recycling mode. In the hot recycling mode, the hydrogen carrier manufacturing device 20 itself is activated, but the manufacturing of hydrogen carriers is not performed (that is, the hydrogen conversion amount is zero). When the hydrogen carrier manufacturing device 20 is set to the hot recycling mode, the manufacturing of hydrogen carriers can be safely stopped while shortening the response time when the manufacturing of hydrogen carriers is resumed.

In the first and second embodiments, when the hydrogen manufacturing amount is decreased, the hydrogen manufacturing device 10 may be shifted to the hot standby mode when the hydrogen manufacturing load is less than or equal to the lower limit value. Further, in the second embodiment, when the hydrogen conversion amount is decreased, the hydrogen carrier manufacturing device 20 may be shifted to the hot recycling mode when the hydrogen carrier production load becomes less than or equal to the lower limit value.

### <Control method processing procedure>

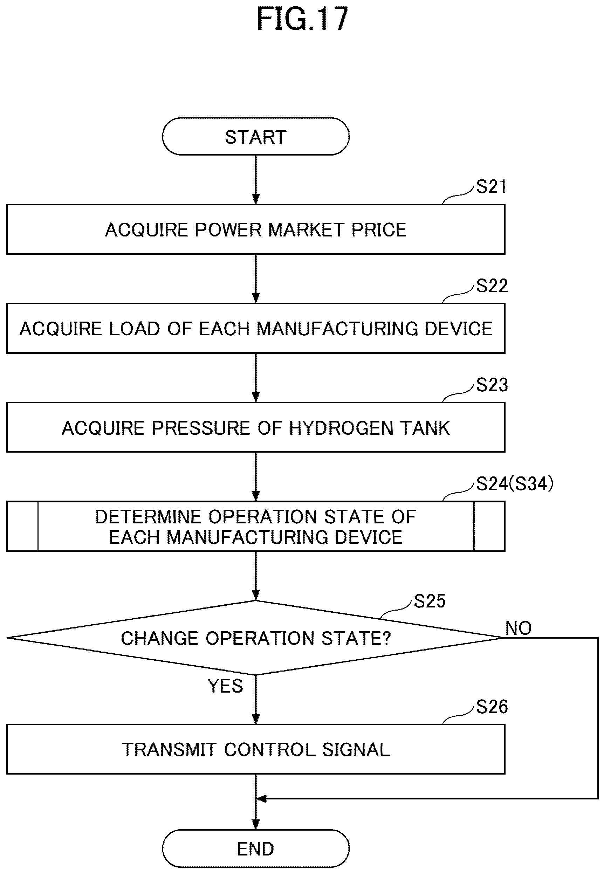

The control method executed by the control apparatus 100 in the present embodiment will be described with reference to FIG. 17. FIG. 17 is a flowchart illustrating an example of the control method in the present embodiment.

Steps S21, S22, S25, and S26 are the same as steps S11, S12, S14, and S15 in the second embodiment. Therefore, the description will be omitted here.

In step S23, the pressure acquisition unit 105 of the control apparatus 100 acquires the hydrogen tank pressure from the hydrogen tank 12. Next, the pressure acquisition unit 105 sends the hydrogen tank pressure to the operation determination unit 103.

In step S24, the operation determination unit 103 of the control apparatus 100 receives the power market price from the price acquisition unit 101. The operation determination unit 103 also receives the hydrogen manufacturing load and the hydrogen carrier production load from the load acquisition unit 102. Further, the operation determination unit 103 receives the hydrogen tank pressure from the pressure acquisition unit 105. Next, the operation determination unit 103 reads the upper limit power price, the hydrogen manufacturing load range, the hydrogen carrier production load range, and the hydrogen tank pressure range from the control information stored in the control information storage unit 120.

The operation determination unit 103 determines the operation state of the hydrogen manufacturing device 10 and the operation state of the hydrogen carrier manufacturing device 20 based on the power market price, the hydrogen manufacturing load, the hydrogen carrier production load, the hydrogen tank pressure, and the control information (upper limit power price, hydrogen manufacturing load range, hydrogen carrier production load range, and hydrogen tank pressure range). Next, the operation determination unit 103 sends the operation state of the hydrogen manufacturing device 10 and the operation state of the hydrogen carrier manufacturing device 20 to the device control unit 104.

### <<Operation state determination process>>

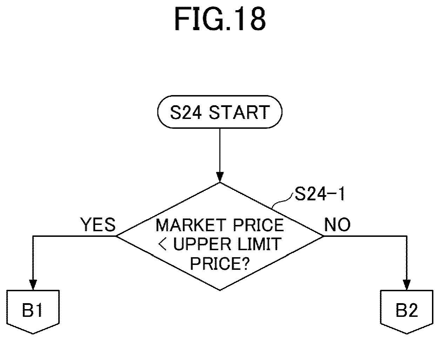

The operation state determination processing (step S24 in FIG. 17) in the present embodiment will be described with reference to FIGS. 18 to 20. FIGS. 18 to 20 are flowcharts illustrating an example of operation state determination processing in the present embodiment.

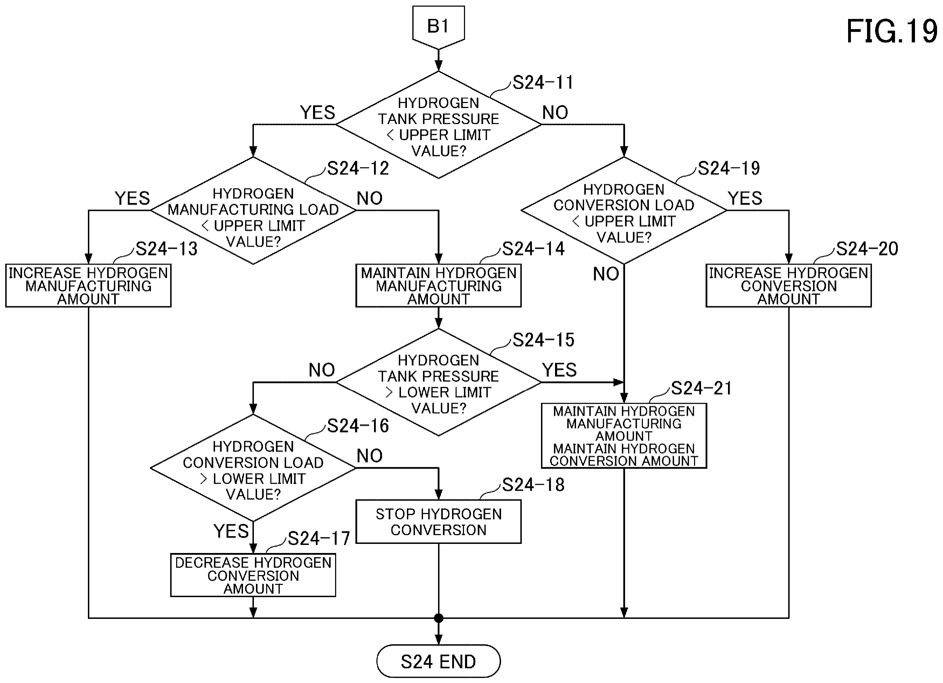

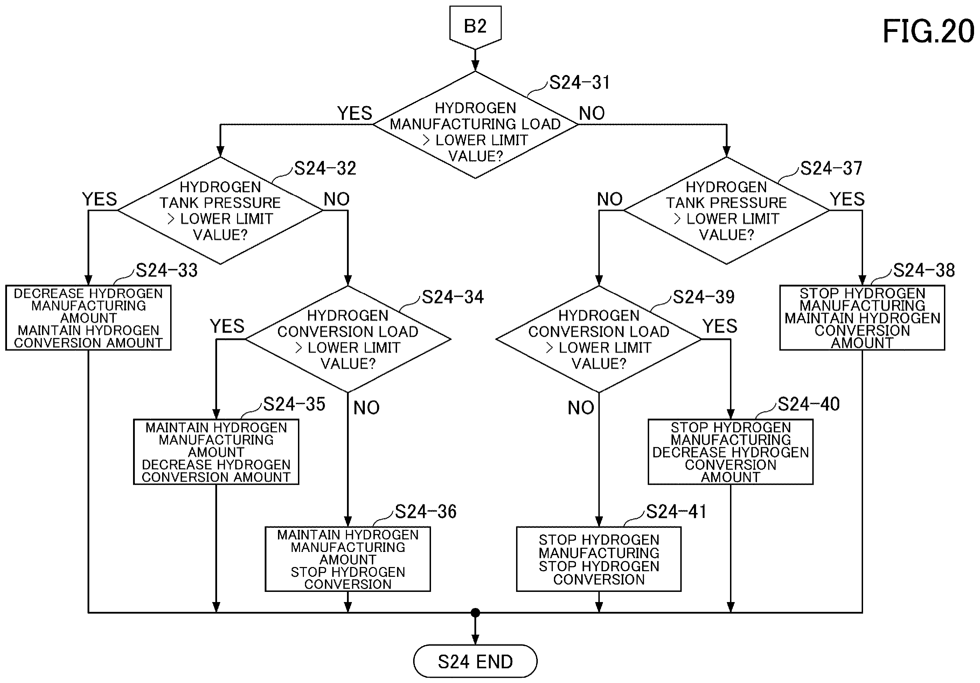

In step S24-1, the operation determination unit 103 determines whether the power market price is lower than the upper limit power price. If the power market price is lower than the upper limit power price (YES), the operation determination unit 103 proceeds to step S24-11 (see FIG. 19). On the other hand, if the power market price is greater than or equal to the upper limit power price (NO), the operation determination unit 103 proceeds to step S24-31 (see FIG. 20).

The explanation will proceed with FIG. 19. In step S24-11, the operation determination unit 103 determines whether the hydrogen tank pressure is lower than the upper limit value of the hydrogen tank pressure range. If the hydrogen tank pressure is lower than the upper limit (YES), the operation determination unit 103 proceeds to step S24-12. On the other hand, if the hydrogen tank pressure is greater than or equal to the upper limit (NO), the operation determination unit 103 proceeds to step S24-19.

In step S24-12, the operation determination unit 103 determines whether the hydrogen manufacturing load is lower than the upper limit of the hydrogen manufacturing load range. If the hydrogen manufacturing load is lower than the upper limit (YES), the operation determination unit 103 proceeds to step S24-13. On the other hand, if the hydrogen manufacturing load is greater than or equal to the upper limit (NO), the operation determination unit 103 proceeds to step S24-14.

In step S24-13, the operation determination unit 103 increases the hydrogen manufacturing amount according to the difference between the power market price and the upper limit power price. Step S24-13 is executed when there is room to increase the hydrogen tank pressure and room to increase the hydrogen manufacturing load. In this case, the hydrogen manufacturing amount can be increased to increase sales.

In step S24-14, the operation determination unit 103 maintains the hydrogen manufacturing amount. Step S24-14 is executed when there is room to increase the hydrogen tank pressure but there is no room to increase the hydrogen manufacturing load. In this case, it is sufficient to maintain the hydrogen manufacturing amount. Thereafter, the operation determination unit 103 proceeds to step S24-15.

In step S24-15, the operation determination unit 103 determines whether the hydrogen tank pressure is higher than the lower limit value of the hydrogen tank pressure range (an example of the first lower limit amount). If the hydrogen tank pressure is higher than the lower limit value (YES), the operation determination unit 103 proceeds to step S24-21. On the other hand, if the hydrogen tank pressure is less than or equal to the lower limit value (NO), the operation determination unit 103 proceeds to step S24-16.

In step S24-16, the operation determination unit 103 determines whether the hydrogen carrier production load is higher than the lower limit of the hydrogen carrier production load range (an example of the second lower limit amount). If the hydrogen carrier production load is higher than the lower limit (YES), the operation determination unit 103 proceeds to step S24-17. On the other hand, if the hydrogen carrier production load is less than or equal to the lower limit (NO), the operation determination unit 103 proceeds to step S24-18.

In step S24-17, the operation determination unit 103 decreases the hydrogen conversion amount according to the difference between the hydrogen tank pressure and the lower limit of the hydrogen tank pressure range. Step S24-17 is executed when there is no room to decrease the hydrogen tank pressure but there is room to decrease the hydrogen carrier production load. In this case, the hydrogen conversion amount is decreased so that the hydrogen tank pressure remains at the lower limit.

In step S24-18, the operation determination unit 103 shifts the operation mode of the hydrogen carrier manufacturing device 20 to the hot recycling mode. That is, the manufacturing of the hydrogen carrier is stopped. Step S24-18 is executed when there is no room to decrease the hydrogen tank pressure and no room to decrease the hydrogen carrier production load. In this case, the manufacturing of the hydrogen carrier is stopped so that the hydrogen tank pressure is restored to the lower limit value or more.

In step S24-19, the operation determination unit 103 determines whether the hydrogen carrier production load is lower than the upper limit value of the hydrogen carrier production load range. If the hydrogen carrier production load is lower than the upper limit value (YES), the operation determination unit 103 proceeds to step S24-20. On the other hand, if the hydrogen carrier production load is greater than or equal to the upper limit value (NO), the operation determination unit 103 proceeds to step S24-21.

In step S24-20, the operation determination unit 103 increases the hydrogen conversion amount by a predetermined ratio. Step S24-20 is executed when there is no room to increase the hydrogen tank pressure but there is room to increase the hydrogen carrier production load. In this case, the hydrogen conversion amount is increased so that the hydrogen tank pressure decreases to the upper limit value or less.

In step S24-21, the operation determination unit 103 maintains the hydrogen manufacturing amount and the hydrogen conversion amount. In step S24-21, when it is desired to increase the manufacturing amount of the hydrogen carrier because the power market price is lower than the upper limit power price, this step is performed in the following 2 cases. In the first case, there is room to change the hydrogen tank pressure, but there is no room to increase the hydrogen manufacturing load (YES in step S24-15). In the second case, there is no room to increase the hydrogen tank pressure, and there is no room to increase the hydrogen carrier production load (NO in step S24-19). In these cases, because there is no room to change the hydrogen manufacturing amount or the hydrogen conversion amount, it is sufficient to maintain the hydrogen manufacturing amount and the hydrogen conversion amount.

The explanation will proceed with FIG. 20. In step S24-31, the operation determination unit 103 determines whether the hydrogen manufacturing load is higher than the lower limit value of the hydrogen manufacturing load range. If the hydrogen manufacturing load is higher than the lower limit value (YES), the operation determination unit 103 proceeds to step S24-32. On the other hand, if the hydrogen manufacturing load is less than or equal to the lower limit value (NO), the operation determination unit 103 proceeds to step S24-37.

In step S24-32, the operation determination unit 103 determines whether the hydrogen tank pressure is higher than the lower limit value of the hydrogen tank pressure range (an example of the first lower limit amount). If the hydrogen tank pressure is higher than the lower limit value (YES), the operation determination unit 103 proceeds to step S24-33. On the other hand, if the hydrogen tank pressure is less than or equal to the lower limit value (NO), the operation determination unit 103 proceeds to step S24-34.

In step S24-33, the operation determination unit 103 decreases the hydrogen manufacturing amount according to the difference between the power market price and the upper limit power price. Further, the operation determination unit 103 maintains the hydrogen conversion amount. Step S24-33 is executed when there is room to decrease the hydrogen tank pressure and room to decrease the hydrogen manufacturing load. In this case, the hydrogen manufacturing amount can be decreased and the manufacturing cost can be reduced.

In step S24-34, the operation determination unit 103 determines whether the hydrogen carrier production load is higher than the lower limit value of the hydrogen carrier production load range (an example of the second lower limit amount). If the hydrogen carrier production load is higher than the lower limit value (YES), the operation determination unit 103 proceeds to step S24-35. On the other hand, if the hydrogen carrier production load is less than or equal to the lower limit value (NO), the operation determination unit 103 proceeds to step S24-36.

In step S24-35, the operation determination unit 103 maintains the hydrogen manufacturing amount. Further, the operation determination unit 103 decreases the hydrogen conversion amount according to the difference between the hydrogen tank pressure and the lower limit value of the hydrogen tank pressure range. Step S24-35 is executed when there is no room to decrease the hydrogen tank pressure but there is room to decrease the hydrogen carrier production load. In this case, the hydrogen conversion amount is decreased while maintaining the hydrogen manufacturing amount so that the hydrogen tank pressure recovers to the lower limit value or more.

In step S24-36, the operation determination unit 103 maintains the hydrogen manufacturing amount. Further, the operation determination unit 103 shifts the operation mode of the hydrogen carrier manufacturing device 20 to the hot recycling mode. That is, the manufacturing of the hydrogen carrier is stopped. Step S24-36 is executed when there is no room to decrease the hydrogen tank pressure and there is no room to decrease the hydrogen carrier production load. In this case, the manufacturing of the hydrogen carrier is stopped so that the hydrogen tank pressure is restored to the lower limit value or more.

In step S24-37, the operation determination unit 103 determines whether the hydrogen tank pressure is higher than the lower limit value (an example of the first lower limit amount) of the hydrogen tank pressure range. If the hydrogen tank pressure is higher than the lower limit value (YES), the operation determination unit 103 proceeds to step S24-38. On the other hand, if the hydrogen tank pressure is less than or equal to the lower limit value (NO), the operation determination unit 103 proceeds to step S24-39.

In step S24-38, the operation determination unit 103 shifts the operation mode of the hydrogen manufacturing device 10 to the hot standby mode. That is, the manufacturing of hydrogen is stopped. The operation determination unit 103 maintains the hydrogen conversion amount. Step S24-38 is executed when there is room to decrease the pressure of the hydrogen tank and there is no room to decrease the hydrogen manufacturing load. In this case, the manufacturing of the hydrogen carrier can be continued while stopping the manufacturing of hydrogen.

In step S24-39, the operation determination unit 103 determines whether the hydrogen carrier production load is higher than the lower limit of the hydrogen carrier production load range (an example of the second lower limit amount). If the hydrogen carrier production load is higher than the lower limit (YES), the operation determination unit 103 proceeds to step S24-40. On the other hand, if the hydrogen carrier production load is less than or equal to the lower limit (NO), the operation determination unit 103 proceeds to step S24-41.

In step S24-40, the operation determination unit 103 shifts the operation mode of the hydrogen manufacturing device 10 to the hot standby mode. That is, the manufacturing of hydrogen is stopped. Further, the operation determination unit 103 decreases the hydrogen conversion amount according to the difference between the hydrogen tank pressure and the lower limit value of the hydrogen tank pressure range. Step S24-40 is executed when there is no room to reduce the hydrogen manufacturing load but there is room to reduce the hydrogen carrier production load. In this case, the manufacturing of the hydrogen carrier can be continued while stopping the manufacturing of hydrogen.

In step S24-41, the operation determination unit 103 shifts the operation mode of the hydrogen manufacturing device 10 to the hot standby mode. That is, the manufacturing of hydrogen is stopped. The operation determination unit 103 shifts the operation mode of the hydrogen carrier manufacturing device 20 to the hot recycling mode. That is, the manufacturing of the hydrogen carrier is stopped. Step S24-41 is executed when there is no room to reduce the hydrogen manufacturing load and there is no room to reduce the hydrogen carrier production load. In this case, hydrogen manufacturing and hydrogen carrier manufacturing are stopped until the power market price falls to less than or equal to the upper limit power price.

Each set value included in the control information may be reset at predetermined time intervals (for example, every few days). To determine whether or not to reset a value, the manufacturing amount of hydrogen carrier calculated based on the sales plan may be compared with the manufacturing amount of hydrogen carrier actually manufactured. For example, if the actual manufacturing amount greatly exceeds the planned manufacturing amount, the upper limit power price and the lower limit of the hydrogen manufacturing load range may be lowered. For example, if the actual manufacturing amount is significantly lower than the planned manufacturing amount, the upper limit power price and the lower limit of the hydrogen manufacturing load range may be set higher.

### <Effect of the third embodiment>

The control apparatus 100 in the present embodiment controls the manufacturing amount of hydrogen and the manufacturing amount of hydrogen carrier so that the load of the hydrogen manufacturing device 10, the load of the hydrogen carrier manufacturing device 20, and the filling pressure of the hydrogen tank 12 are within a predetermined stable operation range. Therefore, according to the control apparatus 100 of the present embodiment, each device included in the hydrogen carrier manufacturing system 1 can be stably operated.

The control apparatus 100 of the present embodiment performs control to increase the manufacturing amount of hydrogen when the power market price is lower than the upper limit power price and the filling pressure of the hydrogen tank 12 is lower than the predetermined upper limit value. Also, the control apparatus 100 performs control to increase the manufacturing amount of hydrogen carrier when the power market price is lower than the upper limit power price and the filling pressure of the hydrogen tank 12 is higher than the predetermined upper limit value. Therefore, according to the control apparatus 100 of the present embodiment, the manufacturing amount of hydrogen and the hydrogen carrier can be increased as long as the filling pressure of the hydrogen tank 12 is within the stable operation range.

The control apparatus 100 of the present embodiment performs control to decrease the manufacturing amount of hydrogen and maintain the manufacturing amount of the hydrogen carrier when the power market price is higher than the upper limit power price and the filling pressure of the hydrogen tank 12 is higher than the predetermined lower limit value. Also, when the power market price is higher than the upper limit power price and the filling pressure of the hydrogen tank 12 is less than or equal to the predetermined lower limit value, the control apparatus 100 performs control to maintain the manufacturing amount of hydrogen and decrease the manufacturing amount of the hydrogen carrier. Therefore, according to the control apparatus 100 of the present embodiment, the manufacturing amount of hydrogen and the hydrogen carrier can be decreased as long as the filling pressure of the hydrogen tank 12 is within the stable operation range.

The control apparatus 100 in the present embodiment shifts the hydrogen manufacturing device 10 to the hot standby mode when the power market price is higher than the upper limit power price and the hydrogen manufacturing amount is less than or equal to the predetermined lower limit value. Therefore, according to the control apparatus 100 in the present embodiment, the manufacturing of hydrogen can be safely stopped such that the load of the hydrogen manufacturing device 10 does not fall below the lower limit value.

The control apparatus 100 in the present embodiment shifts the hydrogen carrier manufacturing device 20 to the hot recycling mode when the power market price is higher than the upper limit power price, the filling pressure of the hydrogen tank 12 is less than or equal to the predetermined lower limit value, and the manufacturing amount of the hydrogen carrier is less than or equal to the predetermined lower limit value. Therefore, according to the control apparatus 100 in the present embodiment, the manufacturing of the hydrogen carrier can be safely stopped such that the filling pressure of the hydrogen tank 12 does not fall below the lower limit value.

### [Fourth embodiment]

In the third embodiment, a configuration in which the mode is automatically shifted to the hot recycling mode when the hydrogen carrier production load reaches the lower limit value has been described. In the fourth embodiment, a configuration in which the mode is not automatically shifted to the hot recycling mode even when the hydrogen carrier production load reaches the lower limit value will be described.

For example, if the hydrogen carrier is ammonia or liquid hydrogen, the safety and reliability may be affected if the hydrogen carrier manufacturing device 20 is automatically changed to the hot recycling mode. In the process of converting hydrogen to ammonia or liquid hydrogen, the processing conditions are severe, such as high temperature, high pressure, or ultra-low temperature. Therefore, it is a matter to carefully decide whether to change the operation mode. Therefore, the designer can optionally decide whether to automatically change the hydrogen carrier manufacturing device 20 to the hot recycling mode based on the device design and the operation policy of the producer.

In the present embodiment, if the hydrogen carrier manufacturing device 20 does not have predetermined operation characteristics, the operation mode is not automatically changed to the hot recycling mode. The predetermined operation characteristics do not depend on the type of hydrogen carrier (methylcyclohexane, ammonia, or liquid hydrogen) and may be optionally decided by the designer based on the design specification of the hydrogen carrier manufacturing device 20 or the operation policy of the hydrogen carrier manufacturing system 1. The predetermined operation characteristics may depend on the type of hydrogen carrier. The predetermined operation characteristics are, for example, the operation characteristics in which the processing conditions are not severe as described above and the operation mode can be automatically changed to the hot recycling mode safely. In the present embodiment, a configuration in which the hydrogen carrier manufacturing device 20 does not automatically change to the hot recycling mode is described, assuming that it does not have the predetermined operation characteristics.

Hereinafter, the hydrogen carrier manufacturing system 1 according to the present embodiment will be described focusing on the differences from the third embodiment.

### <Control method processing procedure>

The control method executed by the control apparatus 100 according to the present embodiment will be described. The control method according to the present embodiment differs from the third embodiment in the operation state determination process (step S24 in FIG. 17). Hereinafter, the operation state determination process according to the present embodiment will be referred to as step S34, and the difference from step S24 in the third embodiment will be mainly described.

### <<Operation state determination process>>

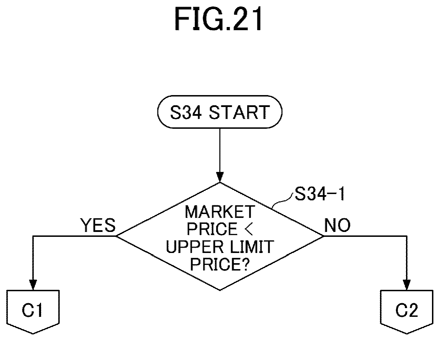

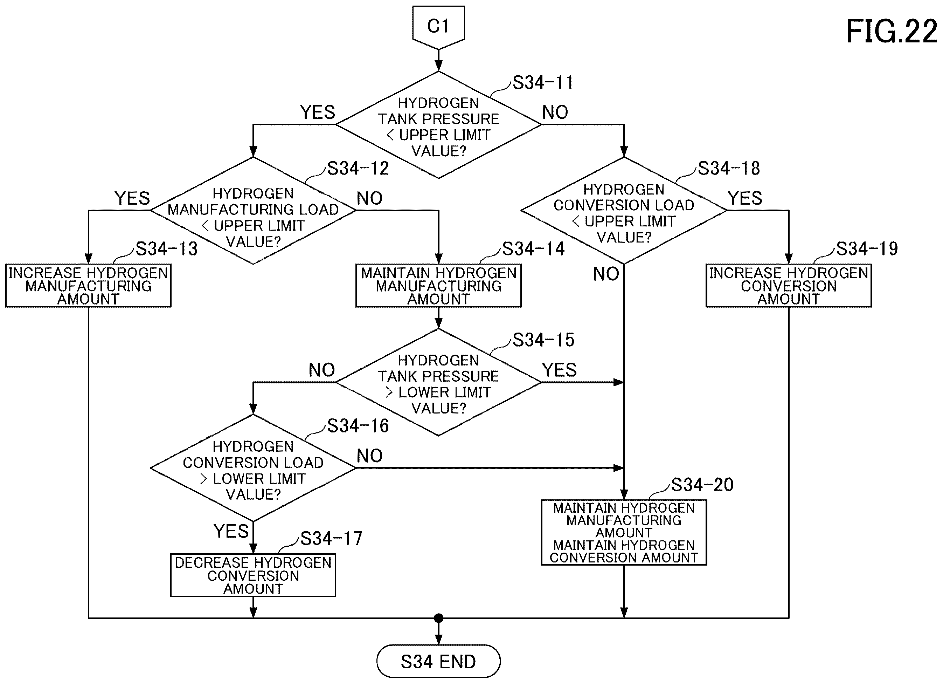

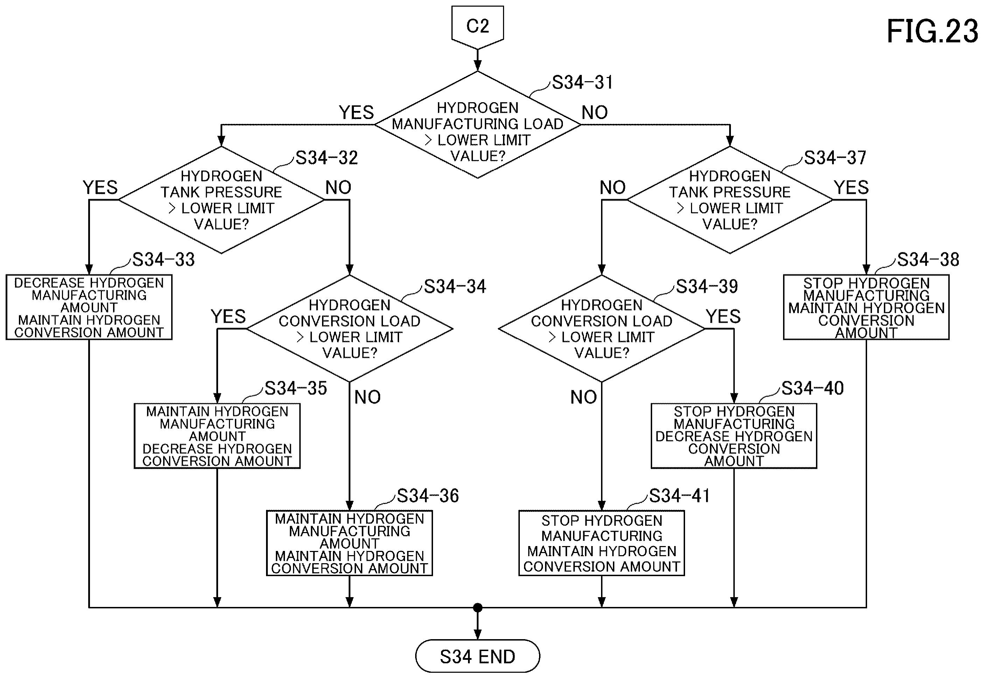

The operation state determination process according to the present embodiment (step S34 in FIG. 17) will be described with reference to FIGS. 21 to 23. FIGS. 21 to 23 are flowcharts illustrating an example of the operation state determination process according to the present embodiment.

In the operation state determination processing of the present embodiment, if the hydrogen carrier production load is less than or equal to the lower limit (NO) in step S34-16, the operation determination unit 103 advances the processing to step S34-20 (corresponding to step S24-21 in the third embodiment).

In step S34-20, the operation determination unit 103 maintains the hydrogen manufacturing amount and the hydrogen conversion amount. Step S34-20 is executed in the following 3 cases in which it is desired to increase the hydrogen carrier manufacturing amount because the power market price is lower than the upper limit price. In the first case, the hydrogen tank pressure is between the upper limit and the lower limit, but there is no room to increase the hydrogen manufacturing load (YES in step S34-15). In the second case, there is no room to increase the hydrogen tank pressure and there is no room to increase the hydrogen carrier production load (NO in step S34-18). In the third case, there is no room to decrease the hydrogen tank pressure and there is no room to decrease the hydrogen carrier production load (NO in step S34-16). In the third embodiment, the hydrogen carrier manufacturing device 20 is shifted to the hot recycling mode in the third case, but in the present embodiment, because it is not automatically shifted to the hot recycling mode, the manufacturing of hydrogen and the hydrogen carrier is continued.

In the operation state determination processing in the present embodiment, if the hydrogen carrier production load is less than or equal to the lower limit (NO) in step S34-34 (corresponding to step S24-34 in the third embodiment), the operation determination unit 103 advances the processing to step S34-36 (corresponding to step S24-36 in the third embodiment).

In step S34-36, the operation determination unit 103 maintains the hydrogen manufacturing amount. Further, the operation determination unit 103 maintains the hydrogen conversion amount. Step S34-36 is executed when there is no room to decrease the hydrogen tank pressure and no room to decrease the hydrogen carrier production load. In this case, in the third embodiment, the hydrogen carrier manufacturing device 20 is shifted to the hot recycling mode, but in the present embodiment, because it is not automatically shifted to the hot recycling mode, the manufacturing of hydrogen and the hydrogen carrier is continued.

In the operation state determination process in the present embodiment, if the hydrogen carrier production load is less than or equal to the lower limit (NO) in step S34-39 (corresponding to step S24-39 in the third embodiment), the operation determination unit 103 advances the process to step S34-41 (corresponding to step S24-41 in the third embodiment).

In step S34-41, the operation determination unit 103 shifts the operation mode of the hydrogen manufacturing device 10 to the hot standby mode. That is, the manufacturing of hydrogen is stopped. The operation determination unit 103 maintains the hydrogen conversion amount. Step S34-41 is executed when there is no room to decrease the hydrogen manufacturing load and there is no room to decrease the hydrogen carrier production load. In this case, in the third embodiment, the hydrogen carrier manufacturing device 20 is shifted to the hot recycling mode, but in the present embodiment, because it is not automatically shifted to the hot recycling mode, the manufacturing of the hydrogen carrier is continued while the manufacturing of hydrogen is stopped.

### <Effect of the fourth embodiment>

The control apparatus 100 in the present embodiment maintains the manufacturing amount of hydrogen carrier regardless of the power market price when the filling pressure of the hydrogen tank 12 is less than or equal to the predetermined lower limit value and the manufacturing amount of hydrogen carrier is less than or equal to the predetermined lower limit value. Therefore, according to the control apparatus 100 in the present embodiment, the manufacturing of the hydrogen carrier can be continued such that the load of the hydrogen carrier manufacturing device 20 does not fall below the lower limit value.

### [Modified example 1]

In the first embodiment, the control apparatus 100 installed at the manufacturing site R1 controls each device included in the hydrogen carrier manufacturing system 1 based on information about manufacturing acquired at the manufacturing site R1. In the modified example 1, the control apparatus installed at the consumption area R2 controls each device included in the hydrogen carrier manufacturing system 1 based on information about manufacturing acquired from the manufacturing site R1.

### <Overall configuration of the hydrogen gas generation system>

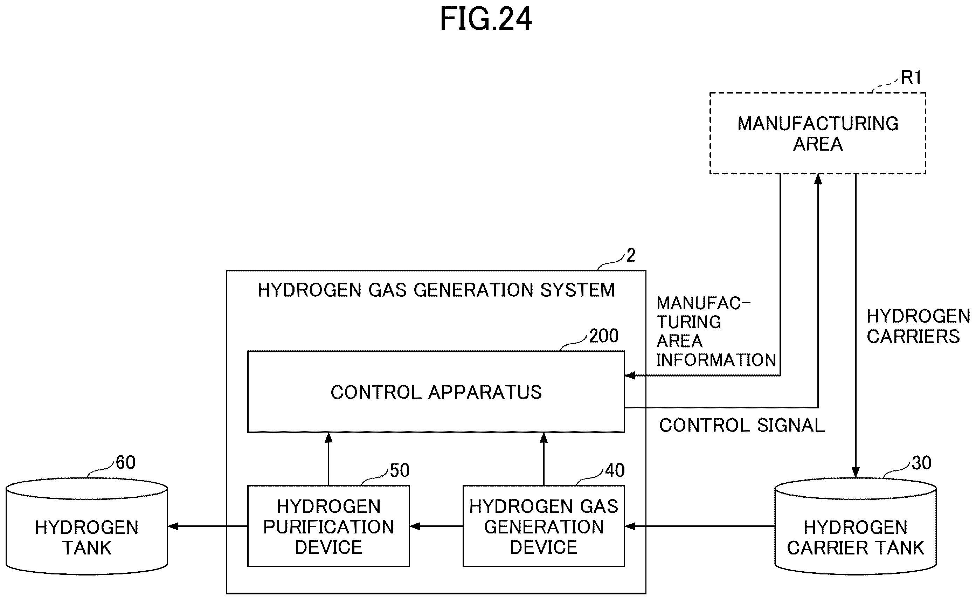

The overall configuration of the hydrogen gas generation system in this modified example will be described with reference to FIG. 24. FIG. 24 is a block diagram illustrating an example of the overall configuration of the hydrogen gas generation system in the present embodiment.

As illustrated in FIG. 24, the hydrogen gas generation system 2 in this modified example includes a hydrogen gas generation device 40, a hydrogen purification device 50, and a control apparatus 200. The hydrogen gas generation system 2 in this modified example is connected to a hydrogen carrier tank 30 and a hydrogen tank 60 in the consumption area R2.

The control apparatus 200 is an information processing apparatus such as a personal computer, a workstation, or a server for controlling the operation of each device included in the hydrogen carrier manufacturing system 1 and the hydrogen gas generation system 2. The control apparatus 200 is configured to be capable of data communication with the power market system M, the power receiving and distributing facility 11, the hydrogen manufacturing device 10, the hydrogen tank 12, the hydrogen carrier manufacturing device 20, the hydrogen gas generation device 40, and the hydrogen purification device 50 through a communication network.

The control apparatus 200 acquires information (hereinafter also referred to as "manufacturing area information") about the manufacturing area from the power market system M, the power receiving and distributing facility 11, the hydrogen manufacturing device 10, the hydrogen tank 12, and the hydrogen carrier manufacturing device 20 installed at the manufacturing area R1. The manufacturing area information includes at least one or more of the power market price, hydrogen manufacturing load, hydrogen carrier production load, or hydrogen tank pressure.

The control apparatus 200 transmits, to the control apparatus 100, a control signal for controlling the operation of each device included in the hydrogen carrier manufacturing system 1, based on the manufacturing area information acquired from the manufacturing area R1. The functional configuration of the control apparatus 200 is the same as any of the control apparatuses 100 described in the above embodiments.

The control apparatus 100 receives a control signal (an example of information related to manufacturing) from the control apparatus 200. The control apparatus 100 transmits a control signal received from the control apparatus 200 to each device included in the hydrogen carrier manufacturing system 1.

### [Application examples]

The control apparatus 100 in each of the above embodiments can be applied not only to the hydrogen carrier manufacturing system 1 in the operation stage but also to the hydrogen carrier manufacturing system 1 in the planning stage. That is, if the predicted value of the power market price can be obtained, the total margin of manufacturing the hydrogen carrier can be estimated according to the fluctuation of the power market price. Therefore, the control apparatus 100 in each of the above embodiments can be applied to maximize the economic efficiency and optimize the investment scope of the hydrogen carrier manufacturing system 1 in the planning stage.

### [Note]

Each of the functions of the above-described embodiments can be implemented by one or more processing circuits. Here, the term "processing circuit" as used herein includes a processor programmed to execute each function by software such as a CPU (Central Processing Unit) or a GPU (Graphics Processing Unit) implemented by an electronic circuit, and equipment such as an ASIC (Application Specific Integrated Circuit), DSP (Digital Signal Processor), FPGA (Field Programmable Gate Array), or a conventional circuit module designed to execute each of the above-described functions.

Note that, in the disclosed technology, modes as described in the clauses below can be considered.

### (Clause 1)

A control apparatus for controlling a hydrogen manufacturing device for manufacturing hydrogen and a hydrogen carrier manufacturing device for converting the hydrogen into a hydrogen carrier, the control apparatus including:
an information acquisition unit configured to acquire information related to manufacturing of the hydrogen and the hydrogen carrier; and
a device control unit configured to control an operation state of at least one of the hydrogen manufacturing device or the hydrogen carrier manufacturing device by using the information.

### (Clause 2)

The control apparatus according to clause 1, wherein the information includes at least a power market price at a manufacturing area at which at least one of the hydrogen or the hydrogen carrier is manufactured.

### (Clause 3)

The control apparatus according to clause 2, wherein the information includes a load of at least one of the hydrogen manufacturing device or the hydrogen carrier manufacturing device.

### (Clause 4)

The control apparatus according to clause 2, wherein the information includes a load of the hydrogen carrier manufacturing device.

### (Clause 5)

The control apparatus according to clause 2, wherein the information includes a storage amount in a hydrogen tank for storing the hydrogen manufactured by the hydrogen manufacturing device.

### (Clause 6)

The control apparatus according to clause 2, wherein when the power market price is lower than a predetermined threshold, the device control unit controls a manufacturing amount of at least one of the hydrogen manufacturing device or the hydrogen carrier manufacturing device to increase.

### (Clause 7)

The control apparatus according to clause 3, wherein the device control unit
controls a manufacturing amount of the hydrogen manufacturing device to increase when the manufacturing amount of the hydrogen manufacturing device is lower than a predetermined upper limit value, and
controls a manufacturing amount of the hydrogen carrier manufacturing device to increase when the manufacturing amount of the hydrogen carrier manufacturing device is lower than a predetermined upper limit value.

### (Clause 8)

The control apparatus according to clause 4, wherein the device control unit controls the manufacturing amount of the hydrogen carrier manufacturing device to increase when the manufacturing amount of the hydrogen carrier manufacturing device is lower than a predetermined upper limit value.

### (Clause 9)

The control apparatus according to clause 5, wherein the device control unit
controls a manufacturing amount of the hydrogen carrier manufacturing device to increase when the storage amount in the hydrogen tank for storing the hydrogen manufactured by the hydrogen manufacturing device is greater than or equal to a predetermined upper limit value, and
controls a manufacturing amount of the hydrogen manufacturing device to increase when the storage amount in the hydrogen tank for storing the hydrogen manufactured by the hydrogen manufacturing device is lower than the predetermined upper limit value.

### (Clause 10)

The control apparatus according to clause 5, wherein the device control unit controls the manufacturing amount of the hydrogen manufacturing device to increase when the storage amount in the hydrogen tank for storing the hydrogen manufactured by the hydrogen manufacturing device is lower than a predetermined upper limit value.

### (Clause 11)

The control apparatus according to clause 10, wherein the device control unit controls the manufacturing amount of the hydrogen manufacturing device to increase according to a difference between the power market price and a predetermined threshold.

### (Clause 12)

The control apparatus according to clause 5, wherein the device control unit controls the manufacturing amount of the hydrogen carrier manufacturing device to decrease when the storage amount of the hydrogen tank for storing the hydrogen manufactured by the hydrogen manufacturing device is less than or equal to a predetermined lower limit value and the manufacturing amount of the hydrogen carrier manufacturing device is higher than a predetermined lower limit value.

### (Clause 13)

The control apparatus according to clause 5, wherein the device control unit controls to stop the manufacturing of the hydrogen carrier when the storage amount of the hydrogen tank for storing the hydrogen manufactured by the hydrogen manufacturing device is less than or equal to a predetermined lower limit value and the manufacturing amount of the hydrogen carrier manufacturing device is less than or equal to a predetermined lower limit value.

### (Clause 14)

The control apparatus according to clause 2, wherein the device control unit controls a manufacturing amount of at least one of the hydrogen manufacturing device or the hydrogen carrier manufacturing device to decrease when the power market price is greater than or equal to a predetermined threshold.

### (Clause 15)

The control apparatus according to clause 14, wherein the device control unit
controls the manufacturing amount of the hydrogen manufacturing device to decrease when the manufacturing amount of the hydrogen manufacturing device is higher than a predetermined lower limit value, and
controls the manufacturing amount of the hydrogen carrier manufacturing device to decrease when the manufacturing amount of the hydrogen carrier manufacturing device is higher than a predetermined lower limit value.

### (Clause 16)

The control apparatus according to clause 14, wherein the device control unit instructs manufacturing by the hydrogen manufacturing device to be stopped when the manufacturing amount of the hydrogen manufacturing device is less than or equal to a predetermined lower limit value.

### (Clause 17)

The control apparatus according to clause 14, wherein the device control unit controls to decrease the manufacturing amount of the hydrogen carrier manufacturing device when the manufacturing amount of the hydrogen carrier manufacturing device is higher than a predetermined lower limit value.

### (Clause 18)

The control apparatus according to clause 14, wherein the device control unit controls manufacturing of the hydrogen carrier to stop when a storage amount in a hydrogen tank for storing the hydrogen manufactured by the hydrogen manufacturing device is less than or equal to a predetermined first lower limit value and the manufacturing amount of the hydrogen carrier manufacturing device is less than or equal to a predetermined second lower limit value.

### (Clause 19)

The control apparatus according to clause 18, wherein the device control unit instructs manufacturing of the hydrogen carrier to be stopped when the hydrogen carrier manufacturing device has a predetermined operation characteristic, and controls the manufacturing amount of the hydrogen carrier to be maintained when the hydrogen carrier manufacturing device does not have the predetermined operation characteristic.

### (Clause 20)

A hydrogen carrier manufacturing system including:
a hydrogen manufacturing device configured to manufacture hydrogen;
a hydrogen carrier manufacturing device configured to convert the hydrogen into a hydrogen carrier; and
a control apparatus configured to control the hydrogen manufacturing device and the hydrogen carrier manufacturing device, wherein
the control apparatus includes:
   an information acquisition unit configured to acquire information related to manufacturing of the hydrogen and the hydrogen carrier; and
   a device control unit configured to control an operation state of at least one of the hydrogen manufacturing device or the hydrogen carrier manufacturing device by using the information.

### (Clause 21)

A control method executed by a control apparatus for controlling a hydrogen manufacturing device for manufacturing hydrogen and a hydrogen carrier manufacturing device for converting the hydrogen into a hydrogen carrier, the control method including:
acquiring information related to manufacturing of the hydrogen and the hydrogen carrier; and
controlling an operation state of at least one of the hydrogen manufacturing device or the hydrogen carrier manufacturing device by using the information.

Although the embodiments of the present invention have been described in detail above, the present invention is not limited to these embodiments, and various modifications or changes may be made within the scope of the gist of the present invention as described in the claims.

This application is based upon and claims priority to Japanese Patent Application No. 2023-25201, filed on February 21, 2023 before the Japan Patent Office, the entire contents of which are incorporated herein by reference.

### DESCRIPTION OF REFERENCE NUMERALS

1 hydrogen carrier manufacturing system
2 hydrogen gas generation system
10 hydrogen manufacturing device
11 power receiving and distributing facility
12 hydrogen tank
20 hydrogen carrier manufacturing device
21 MCH manufacturing device
22 ammonia manufacturing device
23 liquid hydrogen manufacturing device
30 hydrogen carrier tank
31 MCH tank
32 ammonia tank
33 liquid hydrogen tank
100 control apparatus
101 price acquisition unit
102 load acquisition unit
103 operation determination unit
104 device control unit
105 pressure acquisition unit
120 control information storage unit

## Claims

1. A control apparatus for controlling a hydrogen manufacturing device for manufacturing hydrogen and a hydrogen carrier manufacturing device for converting the hydrogen into a hydrogen carrier, the control apparatus comprising:
an information acquisition unit configured to acquire information related to manufacturing of the hydrogen and the hydrogen carrier; and
a device control unit configured to control an operation state of at least one of the hydrogen manufacturing device or the hydrogen carrier manufacturing device by using the information.

2. The control apparatus according to claim 1, wherein the information includes at least a power market price at a manufacturing area at which at least one of the hydrogen or the hydrogen carrier is manufactured.

3. The control apparatus according to claim 2, wherein the information includes a load of at least one of the hydrogen manufacturing device or the hydrogen carrier manufacturing device.

4. The control apparatus according to claim 2, wherein the information includes a storage amount in a hydrogen tank for storing the hydrogen manufactured by the hydrogen manufacturing device.

5. The control apparatus according to claim 2, wherein when the power market price is lower than a predetermined threshold, the device control unit controls a manufacturing amount of at least one of the hydrogen manufacturing device or the hydrogen carrier manufacturing device to increase.

6. The control apparatus according to claim 3, wherein the device control unit
controls a manufacturing amount of the hydrogen manufacturing device to increase when the manufacturing amount of the hydrogen manufacturing device is lower than a predetermined upper limit value, and
controls a manufacturing amount of the hydrogen carrier manufacturing device to increase when the manufacturing amount of the hydrogen carrier manufacturing device is lower than a predetermined upper limit value.

7. The control apparatus according to claim 4, wherein the device control unit
controls a manufacturing amount of the hydrogen carrier manufacturing device to increase when the storage amount in the hydrogen tank for storing the hydrogen manufactured by the hydrogen manufacturing device is greater than or equal to a predetermined upper limit value, and
controls a manufacturing amount of the hydrogen manufacturing device to increase when the storage amount in the hydrogen tank for storing the hydrogen manufactured by the hydrogen manufacturing device is lower than the predetermined upper limit value.

8. The control apparatus according to claim 7, wherein the device control unit controls the manufacturing amount of the hydrogen manufacturing device to increase according to a difference between the power market price and a predetermined threshold.

9. The control apparatus according to claim 2, wherein the device control unit controls a manufacturing amount of at least one of the hydrogen manufacturing device or the hydrogen carrier manufacturing device to decrease when the power market price is greater than or equal to a predetermined threshold.

10. The control apparatus according to claim 9, wherein the device control unit
controls the manufacturing amount of the hydrogen manufacturing device to decrease when the manufacturing amount of the hydrogen manufacturing device is higher than a predetermined lower limit value, and
controls the manufacturing amount of the hydrogen carrier manufacturing device to decrease when the manufacturing amount of the hydrogen carrier manufacturing device is higher than a predetermined lower limit value.

11. The control apparatus according to claim 9, wherein the device control unit instructs manufacturing by the hydrogen manufacturing device to be stopped when the manufacturing amount of the hydrogen manufacturing device is less than or equal to a predetermined lower limit value.

12. The control apparatus according to claim 9, wherein the device control unit controls manufacturing of the hydrogen carrier to stop when a storage amount in a hydrogen tank for storing the hydrogen manufactured by the hydrogen manufacturing device is less than or equal to a predetermined first lower limit value and the manufacturing amount of the hydrogen carrier manufacturing device is less than or equal to a predetermined second lower limit value.

13. The control apparatus according to claim 12, wherein the device control unit instructs manufacturing of the hydrogen carrier to be stopped when the hydrogen carrier manufacturing device has a predetermined operation characteristic, and controls the manufacturing amount of the hydrogen carrier to be maintained when the hydrogen carrier manufacturing device does not have the predetermined operation characteristic.

14. A hydrogen carrier manufacturing system comprising:
a hydrogen manufacturing device configured to manufacture hydrogen;
a hydrogen carrier manufacturing device configured to convert the hydrogen into a hydrogen carrier; and
a control apparatus configured to control the hydrogen manufacturing device and the hydrogen carrier manufacturing device, wherein
the control apparatus includes:
an information acquisition unit configured to acquire information related to manufacturing of the hydrogen and the hydrogen carrier; and
a device control unit configured to control an operation state of at least one of the hydrogen manufacturing device or the hydrogen carrier manufacturing device by using the information.

15. A control method executed by a control apparatus for controlling a hydrogen manufacturing device for manufacturing hydrogen and a hydrogen carrier manufacturing device for converting the hydrogen into a hydrogen carrier, the control method comprising:
acquiring information related to manufacturing of the hydrogen and the hydrogen carrier; and
controlling an operation state of at least one of the hydrogen manufacturing device or the hydrogen carrier manufacturing device by using the information.
